# EUROPÄISCHE PATENTSCHRIFT

(11) **EP 3 696 537 B1**
(45) Veröffentlichungstag und Bekanntmachung des Hinweises auf die Patenterteilung: **15.05.2024**
(21) Anmeldenummer: 19157558.8
(22) Anmeldetag: 15.02.2019
(51) Int. Cl.: G01N 21/88, G01N 21/95, G01B 11/25

(54) **VORRICHTUNG UND VERFAHREN ZUR SCHADENSERKENNUNG AN EINEM FAHRENDEN FAHRZEUG**
DEVICE AND METHOD FOR DETECTING DAMAGE TO A MOVING VEHICLE
DISPOSITIF ET PROCÉDÉ DE DÉTECTION DES DOMMAGES SUR UN VÉHICULE EN DÉPLACEMENT

(43) Veröffentlichungstag der Anmeldung: 19.08.2020
(73) Patentinhaber: SXT Retina Lab GmbH & Co. KG, 82049 Pullach (DE)
(72) Erfinder: Freiherr von Finck, Kasimir Clemens Patrick, 82049 München (DE)
(74) Vertreter: Zimmermann & Partner Patentanwälte mbB

(56) Entgegenhaltungen:
- WO-A1-2018/037336
- WO-A2-2004/081488
- DE-B3-102017 210 558
- DE-U1-202018 103 274
- JP-A- 2018 059 835

## Beschreibung

### Technisches Gebiet

Die Erfindung betrifft eine Vorrichtung und ein Verfahren zur Erkennung von Schäden an einem Fahrzeug, insbesondere einem Automobil.

### Technischer Hintergrund

In vielen Fahrzeugindustrien besteht ein Interesse, Schäden an Fahrzeugen rasch und zuverlässig erkennen und dokumentieren zu können. Die Erkennung von Schäden kann eine nachfolgende Wartung ermöglichen und der unmittelbaren Sicherheit des Fahrzeugs dienen, z.B. wenn Risse oder Verformungen der Fahrzeugstruktur erkannt werden. Schäden wie z.B. Kratzer oder Dellen können mittelbar die Fahrzeugstruktur schädigen, z.B. wenn sich hierdurch bedingt eine Durchrostung ergibt, oder können zumindest den Wert des Fahrzeugs beeinträchtigen. Die Schadenserkennung kann daher für alle Land-, Luft- oder Wasserfahrzeuge relevant sein, insbesondere aberfür Automobile und speziell für Automobile, die vermietet werden und einem häufigen Fahrerwechsel unterliegen. In letzterem Fall besteht ein besonderer Zielkonflikt dahingehend, dass ein Autovermieter seinen Kunden eine schnelle und bequeme Art nicht nur der Entgegennahme, sondern insbesondere auch der Rückgabe des gemieteten Automobils ermöglichen möchte, sich gleichzeitig aber dem Risiko ausgesetzt sieht, bei einer schnellen Rückgabe Schäden nicht ausreichend erkennen und/oder zuverlässig und nach objektiven Kriterien dokumentieren und dann eindeutig einem Kunden zuordnen zu können, um diesen für die Schäden in Anspruch nehmen zu können.

Bei Fahrzeugrückgabe eines vermieteten Automobils wird meistens eine Sichtprüfung durch eine Person am stehenden Fahrzeug durchgeführt. Erkannte Schäden werden mit einem bestehenden Oberflächenatlas des Fahrzeugs abgeglichen, um zu erkennen, ob ein Alt- oder Neuschaden vorliegt. Bei einem Neuschaden wird eine Dokumentation durch Abfotografieren oder ggf. Abfilmen des Schadens und Neueintrag im Oberflächenatlas des Fahrzeugs vorgenommen, wobei die Einstellung und Bedienung der entsprechenden Foto- oder Videokamera, z.B. einer Smartphone-Kamera, der prüfenden Person obliegt. Dieses Verfahren ist in mehrfacher Hinsicht störanfällig. Zum einen kann es vorkommen, dass gerade bei einer schnell durchzuführenden Sichtprüfung, u.U. noch bei schlechtem Licht, Schäden wie z.B. Kratzer sehr geringer Breite bzw. Länge (z.B. kleiner als 0,5 mm Breite oder 1 cm Länge) oder Dellen sehr geringer Tiefe und geringen Durchmessers (z.B. mit eine Tiefe von wenigen Millimetern und weniger als 3 cm Durchmesser) durch die prüfende Person bereits nicht bemerkt werden. Daneben kann es selbst dann, wenn der Schaden auf Sicht erkannt wurde, dazu kommen, dass er in dem aufgenommenen Foto oder ggf. Video nicht richtig erkennbar ist, z.B. wegen unzureichender Beleuchtung, wegen Reflektionen infolge des Einsatzes eines Blitzlichts, wegen zu großen Abstands vom Fahrzeug bei der Aufnahme und damit zu geringer Auflösung des Fotos, wegen fehlender Handruhe und damit Verwackelung des Bildes und vielem mehr. Insbesondere ein Bild zu generieren, auf dem Dellen geringer Tiefe gut sichtbar sind, ist auf diese Art sehr schwierig. Schließlich kann selbst dann, wenn der Schaden auf dem Foto erkennbar ist, die Zuordnung zu einer speziellen Position auf dem Fahrzeug, d.h. die Schadenslokalisierung am Fahrzeug in seiner Gesamtheit, unzureichend dokumentiert sein. Solche Unzulänglichkeiten können später auch bei der Schadensregulierung erhebliche Probleme bereiten.

Statt einer Sichtprüfung ist es auch bekannt, das Automobil nicht-händisch mit mehreren Überwachungskameras abzufilmen oder mit mehreren Fotokameras aus unterschiedlichen Blickwinkeln abzufotografieren. In den Video- oder Einzelbildern müssen Schäden anschließend durch Inspektion des Bildmaterials erkannt werden. Dies scheitert gerade bei kleineren Kratzern oder flachen Dellen regelmäßig schon daran, dass das aufgenommene Bildmaterial nicht gut genug ist, um überhaupt auch nur potentiell etwas erkennen zu können. Die Bildaufnahme durch eine Person ermöglichte es zumindest, sofern ein (Neu-)Schaden durch Sichtprüfung erkannt wurde, dass sich die Bildaufnahme der Person auf die Schadensregion konzentrierte, auch wenn menschliche Fehler die Bilddatenqualität der Bildaufnahme beeinträchtigen konnten. Bei der Aufnahme durch aus dem Stand der Technik bekannte Überwachungskameras und dergleichen, die das gesamte Automobil aufnehmen, ist meist die Datenqualität wie z.B. die Auflösung der Bilder von vornherein unzureichend, um kleinere Schäden erkennen zu können, insbesondere wenn auch noch Verschmutzung hinzutritt, und unabhängig davon, ob die Auswertung vom Menschen oder von einer Maschine vorgenommen wird. Die Datenqualität leidet häufig schon unter dem Umstand, dass die Beleuchtungssituation, z.B. maximal 300 Ix Beleuchtungsstärke mit gewöhnlichem (Umgebungs-)Licht, keine gute Auflösung und keine schnellen Aufnahmen gestattet. Doch selbst wenn dies ausnahmsweise nicht der Fall sein sollte, so leidet die Datenqualität daran, dass bei der Bildaufnahme gerade noch nicht bekannt ist, ob ein Schaden vorliegt und um was für eine Art von Schaden (Kratzer, Delle...) es sich dabei handeln mag. Die Aufnahme kann sich also weder auf eine Position konzentrieren, um Blickwinkel, Beleuchtung usw. dahingehend optimieren, noch Vorkehrungen treffen, um geeignete Maßnahmen für die Bildaufnahme je nach der Art des Schadens zu treffen. Die Bilddatenqualität ist für die Erkennung von kleinen Schäden und Dellen, möglicherweise auch noch in Abgrenzung von Staub/leichter Verschmutzung, oft so unzureichend, dass eine maschinelle Erkennungsquote nicht über das hinausgeht, was man nach reinem Zufall erwarten würde.

DE 10 2017 210 558 B3 bezieht sich auf eine Vorrichtung zur Vermessung von Karosserieschäden an Kraftfahrzeugen. Die Vorrichtung weist eine Beleuchtungseinrichtung mit LEDs auf, die Lichtstreifen auf der Fahrzeugkarosserie erzeugt, sowie Flächenkameras für eine deflektometrische Erfassung der von der Fahrzeugkarosserie reflektierten Beleuchtungsstruktur. Die Vorrichtung weist ferner 3D-Kameras 11 auf zur Erzeugung von Tiefenbildern von der Form des Fahrzeugs. Die Vorrichtung weist eine Auswerteeinheit auf, die in den Oberflächenbildern Defekte an der Karosserie identifiziert und durch Projektion der Oberflächenbilder auf die Tiefenbilder die identifizierten Defekte am Fahrzeug lokalisiert. DE 20 2018 103 274 U1 betrifft eine Vorrichtung zur Oberflächeninspektion eines Kraftfahrzeugs. Die Vorrichtung umfasst Linienlaser unterschiedlicher Farbe, ein Reflektorschild, eine Kamera und eine Auswerteeinheit. Ein zu inspizierender Bereich wird mit linienförmigen Strahlen der Linienlaser bedeckt, deren Abbild auf dem Reflektorschild von der Kamera aufgenommen wird. Die Messanordnung mit Linienlasern, Kamera und Reflektorschild ist entlang einer Längsrichtung des Kraftfahrzeugs verschiebbar, wobei die Linienlaser über eine Schwenkeinrichtung schwenkbar sind, um die Laserlinien auf dem Reflektorschild zu zentrieren. WO 2004/081488 A2 betrifft ein Scan-System zur Detektion von Anomalien von Objekten, wie z.B. einem Motorfahrzeug. Das Scan-System umfasst einen Projektor, der mit einer Lichtquelle und einer Glasplatte ein absolut kodiertes, räumliches Muster. Die Lichtquelle kann Infrarotfrequenzen, sichtbare Frequenzen oder Ultraviolettfrequenzen emittieren. Ihre Farbe kann ggf. variiert, eine Polarisation eingestellt oder eine stroboskopische Beleuchtung vorgenommen werden. Das Scan-System umfasst Stereokameras, die eine bewegliche Scan-Matrix bilden, die horizontal hin- und her über das Motorfahrzeug bewegt sowie gedreht werden kann. JP2018059835 A befasst sich mit einem Verfahren und einer Vorrichtung zur Messung der Aussenform von Eisenbahnfahrzeugen.

Es besteht ein Bedürfnis, Vorrichtungen und Verfahren zum Erkennen von Schäden an Fahrzeugen zu verbessern, insbesondere für eine Schadenserkennung, die zeitlichen Beschränkungen unterliegt.

### Zusammenfassung

Im Lichte des Obigen wird eine Vorrichtung nach Patentanspruch 1 und ein Verfahren nach Patentanspruch 10 bereitgestellt. Vorteilhaft Weiterbildungen und Ausführungsformen ergeben sich aus den Unteransprüchen und aus der Beschreibung.

Ein Aspekt betrifft eine Vorrichtung zur Schadenserkennung an einem fahrenden Fahrzeug. Die Vorrichtung umfasst ein Beleuchtungssystem zum Beleuchten des fahrenden Fahrzeugs, ein Sensorsystem zum Erfassen von Bilddaten von dem fahrenden Fahrzeug und ein Auswertesystem zum Erkennen eines Fahrzeugschadens. Nach einer Ausführungsform umfasst das Beleuchtungssystem eine erste Beleuchtungseinheit, die eingerichtet ist, das fahrende Fahrzeug mit erstem Licht zu beleuchten, und eine zweite Beleuchtungseinheit, die eingerichtet ist, das fahrende Fahrzeug mit zweitem Licht zu beleuchten, das von dem ersten Licht verschieden ist. Dabei ist die erste Beleuchtungseinheit eingerichtet, das fahrende Fahrzeug mit polarisiertem Licht zu beleuchten, wobei das erste Licht polarisiertes Licht ist, und die zweite Beleuchtungseinheit ist eingerichtet, das fahrende Fahrzeug mit Licht zu beleuchten, das eine Frequenz im Infrarotbereich und eine räumliche Strukturierung aufweist, wobei das zweite Licht Infrarotlicht und räumlich strukturiertes Licht ist. Das Sensorsystem umfasst ein erstes Sensorelement, das eingerichtet ist, erste Bilddaten von dem fahrenden Fahrzeug bei Beleuchtung mit dem ersten Licht zu erfassen und ein zweites Sensorelement, das eingerichtet ist, zweite Bilddaten von dem fahrenden Fahrzeug bei Beleuchtung mit dem zweiten Licht zu erfassen, wobei das erste Sensorelement eingerichtet ist, die ersten Bilddaten bei der Beleuchtung mit dem ersten Licht unter Trennung von der Beleuchtung mit dem zweiten Licht zu erfassen, und wobei das zweite Sensorelement eingerichtet ist, die zweiten Bilddaten bei der Beleuchtung mit dem zweiten Licht unter Trennung von der Beleuchtung mit dem ersten Licht zu erfassen. Das Auswertesystem ist eingerichtet zum Erkennen des Fahrzeugschadens auf Grundlage der erfassten ersten und zweiten Bilddaten.

Ein weiterer Aspekt betrifft ein Verfahren zur Schadenserkennung an einem fahrenden Fahrzeug. Nach einer Ausführungsform umfasst das Verfahren ein Beleuchten des fahrenden Fahrzeugs mit erstem Licht und ein Beleuchten des fahrenden Fahrzeugs mit zweitem Licht, wobei das erste Licht von dem zweiten Licht verschieden ist, wobei das erste Licht polarisiertes Licht ist und wobei das zweite Licht Infrarotlicht und räumlich strukturiertes Licht ist. Das Verfahren umfasst ein Erfassen von ersten Bilddaten von dem fahrenden Fahrzeug bei Beleuchtung mit dem ersten Licht unter Trennung von der Beleuchtung mit dem zweiten Licht und ein Erfassen von zweiten Bilddaten von dem fahrenden Fahrzeug bei der Beleuchtung mit dem zweiten Licht unter Trennung von der Beleuchtung mit dem ersten Licht. Das Verfahren umfasst ein Erkennen eines Fahrzeugschadens auf Grundlage der erfassten ersten und zweiten Bilddaten.

### Kurze Beschreibung der Zeichnungen

Die oben erwähnten und weitere detaillierte Aspekte werden in der Beschreibung näher ausgeführt und zumindest teilweise mit Bezug auf die Abbildungen erläutert. Dabei zeigen die Abbildungen folgendes:
Fig. 1 zeigt eine schematische Darstellung einer Vorrichtung zur Schadenserkennung an einem fahrenden Fahrzeug gemäß einer hierin beschriebenen Ausführungsform;
Figs. 2-4 zeigen perspektivische Außen- und Innenansichten einer Vorrichtung gemäß einer hierin beschriebenen Ausführungsform;
Figs. 5-6 zeigen illustrativ gezeichnete Bilder, wie sie von Kameras der Vorrichtung nach Figs. 2-4 aufgenommen worden sein könnten;
Fig. 7 illustriert ein Verfahren.

### Detaillierte Beschreibung

Nachfolgend werden Ausführungsformen beschrieben. Bei der Beschreibung von Ausführungsformen anhand von Figuren werden gleiche Bezugszeichen für gleiche oder ähnliche Teile verwendet, und sofern möglich auf eine wiederholte Beschreibung solcher Teile verzichtet.

Die Vorrichtung gemäß hierin beschriebenen Ausführungsformen ist zur Schadenserkennung an einem fahrenden Fahrzeug eingerichtet. Dabei bewegt sich das Fahrzeug typischerweise aus eigener Kraft, könnte aber auch z.B. auf einem Förderband ähnlich dem in einer Waschstraße durch die Vorrichtung hindurchbewegt werden. Eine Waschstraße könnte der Vorrichtung sogar vorgeschaltet sein, um Schmutz vom Fahrzeug zu entfernen und die Bilddatenqualität zu verbessern und die Schadenserkennung zu vereinfachen, z.B. wenn eine Rückgabestation für das Fahrzeug eine Waschstraße aufweist. Die Fähigkeit der Vorrichtung, Schäden an einem fahrenden Fahrzeug zu erkennen, bezieht sich letztlich auf eine Relativbewegung zwischen der Vorrichtung und dem Fahrzeug, insbesondere auf eine Relativbewegung mit einer Geschwindigkeit von mindestens 3,6 km/h (= 1 m/s) oder mindestens 5 km/h (Schrittgeschwindigkeit). Typischerweise ruht die Vorrichtung relativ zum Erdboden, kann also insbesondere eine stationäre Vorrichtung sein. Die Schadenserkennung mag bei Relativbewegung mit einer Geschwindigkeit von weniger als 50 km/h oder weniger als 25 km/h erfolgen.

Die Vorrichtung kann an Rückgabestationen eingesetzt werden, die sich beispielsweise in Parkhäusern oder Parkplätzen (z.B. am Flughafen) befinden, an Waschstraßen angeschlossen sind oder sich an anderen Mietstationen in einem Innen- oder Außenraum befinden. Fahrzeuge können z.B. Landfahrzeuge wie Personenkraftwagen oder Lastkraftwagen sein. Fahrzeuge sind typischerweise Automobile/Personenkraftwagen. D.h. die Fahrzeuge sind große, bewegte, dreidimensionale Objekte mit komplexen Oberflächen, wobei "groß" bedeutet, dass mindestens ein Mensch darin Platz finden kann. Fahrzeuge können insbesondere mindestens eine der folgenden Eigenschaften aufweisen: Fähigkeit, Personen aufzunehmen; Fähigkeit, Personen zu befördern; selbstfahrend; motorisiert, insbesondere durch Verbrennungs- oder Elektromotoren; nicht-plane Oberflächen; gewölbte Oberflächen; mit Kanten versehene Oberflächen; lackierte Oberflächen, insbesondere farbig lackierte Oberflächen; Oberflächen von mehr als 4, 6, 8 oder 10 Quadratmetern Größe. Bezug auf ein Fahrzeug oder Fahrzeugeigenschaften impliziert eine entsprechende Auslegung der Vorrichtung (z.B. Dimensionierung), um ein solches Fahrzeug zu beleuchten, Bilddaten aufzunehmen und Schäden daran zu erkennen.

Die Vorrichtung umfasst ein Beleuchtungssystem, ein Sensorsystem und ein Auswertesystem. Das Sensorsystem und das Auswertesystem können zur Datenübertragung verbunden sein. Das Sensorsystem kann Sensordaten, insbesondere Bilddaten, an das Auswertesystem übermitteln. Das Auswertesystem kann Steuerbefehle an das Sensorsystem übermitteln. Das Beleuchtungssystem und das Auswertesystem können ebenfalls zur Datenübertragung verbunden sein. Das Auswertesystem kann Steuerbefehle an das Beleuchtungssystem übermitteln. Das Auswertesystem kann eingerichtet sein, das Sensorsystem und/oder das Beleuchtungssystem zu konfigurieren. Das Auswertesystem kann eingerichtet sein während eines Erfassungszeitraums von Bilddaten des fahrenden Fahrzeugs Betriebsparameter des Sensorsystems und/oder des Beleuchtungssystems durch Steuerbefehle anpassen. Die Konfiguration bzw. Anpassung kann insbesondere in Abhängigkeit von Fahrzeugeigenschaften und/oder Bewegungszustand des Fahrzeugs erfolgen. Beispielsweise kann das Auswertesystem die Fahrspur des fahrenden Fahrzeugs bestimmen und in Abhängigkeit von Abweichungen von einer Mittellinie der Vorrichtung die Brennweiten von Kameras des Sensorsystems bereits vor der ersten Erfassung von Bilddaten konfigurieren, bzw. ggf. während des Erfassungszeitraums aufgrund der aktuellen bzw. voraussichtlichen Fahrspur anpassen. Das Auswertesystem kann eingerichtet sein, das Sensorsystem und das Beleuchtungssystem zu koordinieren, insbesondere in zeitlicher Hinsicht, ggf. aber auch in räumlicher, spektraler oder anderer Hinsicht.

Das Beleuchtungssystem kann räumlich dimensioniert sein, um die Durchfahrt des fahrenden Fahrzeugs zu erlauben. Gleiches kann für das Sensorsystem gelten und ggf. ein weiter unten beschriebenes Lichtreduktionssystem gelten. Die Systeme bzw. eines oder mehrere davon können mindestens über einen Halbraum angeordnet sein, der Dach und Seiten des fahrenden Fahrzeugs umgibt, z.B. in der Art eines Torbogens/Durchfahrtbogens oder Tunnels. Die Systeme, und ggf. können, bzw. mindestens eines davon kann, aber auch über den gesamten Raum angeordnet sein, der Dach, Seiten und Unterboden des fahrenden Fahrzeugs umgibt, wobei der Boden, auf dem das Fahrzeug fährt, entsprechende Komponenten aufweisen kann, bzw. entsprechende Komponenten in diesen Boden eingelassen sein können. Die gesamte Vorrichtung ist somit in der Regel von beträchtlicher Größe, und eingerichtet, Bilddaten von großen, dreidimensionalen Objekten wie der Fahrzeugoberfläche zu erzeugen.

Das Beleuchtungssystem ist eingerichtet zum Beleuchten des fahrenden Fahrzeugs. Eine Beleuchtung durch das Beleuchtungssystem, bzw. von Teilen davon, bedeutet, dass das entsprechende Licht dieser Beleuchtung vom Beleuchtungssystem erzeugt ist. Wird nur von einer Beleuchtung gesprochen, kann diese Beleuchtung vom Beleuchtungssystem erzeugtes Licht sein oder kann Hintergrundlicht sein oder kann beides beinhalten.

Das Beleuchtungssystem ist eingerichtet, das fahrende Fahrzeug räumlich strukturiert zu beleuchten. Dazu kann die Strukturierung folgende Arten von Strukturierungen einzeln oder in jeder Kombination umfassen:
zeitliche Strukturierung (z.B. an/aus mit bestimmter Frequenz oder zeitliche Lichtintensitätsmodulation), Frequenzstrukturierung (z.B. Monochromatizität oder definiertes Frequenzspektrum des Lichts) und Polarisationsstrukturierung (z.B. lineare Polarisierung mit verschiedenen Winkeln). Dabei kann die spezielle Beleuchtung die Grundlage bereiten, auf der das entsprechend angepasste und ggf. von dem Auswertesystem gesteuerte Sensorsystem hochqualitative Bilddaten generieren kann, die dann wiederum eine zuverlässige Schadenserkennung durch das Auswertesystem ermöglichen.

Die zweckmäßige Beleuchtung kann von der Art eines zu detektierenden Schadens abhängen. Beispielsweise kann für die Generierung von Bilddaten, aus denen Dellen im Fahrzeug erkannt werden sollen, ein räumliches Muster (eindimensionales Muster wie z.B. Streifen oder zweidimensionales Muster wie z.B. Gitter, Punkte) mit starkem Kontrast auf das Fahrzeug gestrahlt werden, wobei sich das räumliche Muster ggf. auch zeitlich verändern kann (wanderndes Muster; räumlich-zeitliches Muster). Die Reflexion von der Fahrzeugoberfläche kann von Komponenten des Sensorsystems aufgenommen werden. Dabei ist es z.B. möglich, dass Beleuchtung und Reflexionsmessung zueinander im 0° Winkel und ggf. senkrecht zur Fahrzeugoberfläche stattfinden können anstatt - wie von händischen Aufnahmen am stehenden Fahrzeug bekannt - einer störanfälligen Reflexionsmessung im Streiflicht. Exemplarisch könnten gekreuzte, flächige Polarisationsmittel durchstrahlt werden, eines davon vollflächig, eines mit Muster, wodurch z.B. ein Gitter- oder Karomuster erzeugt werden kann. Eine Kamera kann das Reflexionsbild durch ein Loch in den Polarisationsmitteln aufnehmen oder vor den Polarisationsmitteln angeordnet sein, wobei die Kamera entlang derselben Linie misst, in der beleuchtet wird. Für die Qualität der Bilddaten zur Dellenerkennung kann der Einsatz praktisch monochromen Lichts vorteilhaft sein, wie sie z.B. von Gasdampflampen oder gewissen LEDs zur Verfügung gestellt werden, oder der Einsatz von Licht mit speziellem, diskreten Spektrum, wobei ein vorteilhafter starker Kontrast des Musters durch die Reduktion des Hintergrundlichts bzw. des Einflusses des Hintergrundlichts auf die Bilddaten gefördert werden kann.

Für die Generierung von Bilddaten, aus denen Kratzer am Fahrzeug erkannt werden sollen, ist ein auf die Wagenfarbe und ggf. auf die optischen Eigenschaften des Unterlacks angepasstes Frequenzspektrum vorteilhaft, z.B. monochromatisches Licht bestimmter Wellenlänge, das ggf. auch zeitlich variiert werden kann. Daneben kann Beleuchtungslicht unter verschiedenen Winkeln polarisiert sein, ggf. unter zeitlicher oder räumlicher Trennung der einzelnen Polarisationen. Die Beleuchtung kann zudem aus unterschiedlichen Beleuchtungswinkeln stattfinden. Das Beleuchtungssystem kann insbesondere eine erste Beleuchtungseinheit umfassen, die eingerichtet ist, das fahrende Fahrzeug mit erstem Licht zu beleuchten, welches monochromatisches und/oder polarisiertes Licht sein kann. Entsprechend können Komponenten des Sensorsystems durch entsprechende Polarisationsfilter und ggf. zeitliche oder räumliche Trennung der Aufnahmen Bilddaten desselben Bereichs der Fahrzeugoberfläche für unterschiedliche Polarisationen und ggf. für unterschiedliche Wellenlängen umfassen. Es können zusätzlich Detektionen unter verschiedenen Blickwinkeln stattfinden. In dem Auswertesystem können entsprechende polarimetrische Bilder verwendet werden, um Verunreinigungen (Staub, leichte Verschmutzung) herauszufiltern, da diese sensitiv auf die Veränderungen von Wellenlänge und/oder Polarisation reagieren. Entsprechend können Verunreinigungen von Kratzern leichter unterschieden werden. Die Kratzer selbst können durch die richtige Wahl des Frequenzspektrums des Beleuchtungslichts besser hervortreten. Da in der Regel alle Arten von Schäden erkannt werden sollen, kann das Beleuchtungssystem verschiedene Komponentengruppen umfassen, die spezielle Beleuchtungen für unterschiedliche Zwecke zur Verfügung stellen.

Das Sensorsystem kann entsprechend eingerichtet sein, um mit der speziellen Beleuchtung bzw. den speziellen Beleuchtungen durch das Beleuchtungssystem umzugehen. Das Sensorsystem kann für jede Komponentengruppe des Beleuchtungssystems, die eine der speziellen Beleuchtungen für die unterschiedlichen Zwecke/Schadensarten erzeugt, eine entsprechende Komponentengruppe aufweisen, die mit der Komponentengruppe des Beleuchtungssystems zusammenarbeitet. Beispielsweise kann zur Dellenerkennung eine Komponentengruppe des Beleuchtungssystems monochromatisches, räumlich kontrastreich strukturiertes Licht auf einen Bereich der Fahrzeugoberfläche strahlen und eine entsprechende Komponentengruppe des Sensorsystems kann eingerichtet sein, um Licht der entsprechenden Frequenz aufzunehmen (und anderes Licht z.B. durch Spektralfilter/Farbfilter zu unterdrücken, wobei die Erfassung unter einem bestimmten Blickwinkel (z.B. mit wenigen Grad Abweichung relativ zum eingestrahlten Licht) oder unter verschiedenen Blickwinkeln erfolgen kann. Das Auswertesystem wird in den entsprechenden Bilddaten nach einer Verarbeitung vornehmlich nach Dellen suchen. Zur Kratzererkennung kann eine andere Komponentengruppe des Beleuchtungssystems monochromatisches, polarisiertes Licht auf einen Bereich der Fahrzeugoberfläche strahlen und eine entsprechende Komponentengruppe des Sensorsystems kann eingerichtet sein, um Licht der entsprechenden Frequenz und verschiedener Polarisationen aufzunehmen, wobei die Erfassung unter einem oder unter verschiedenen Blickwinkeln erfolgen kann. Das Auswertesystem wird in den entsprechenden Bilddaten nach einer Verarbeitung vornehmlich nach Kratzern suchen.

Dabei können mehrere Paare von sich entsprechenden Komponentengruppen räumlich getrennt sein, so dass durch die mehreren Paare zu derselben Zeit unterschiedliche Bereiche der Fahrzeugoberfläche analysiert werden. Es ist aber auch möglich, dass die mehreren Paare von sich entsprechenden Komponentengruppen in demselben räumlichen Bereich angeordnet sind und denselben Bereich der Fahrzeugoberfläche analysieren, jedoch eine Trennung durch zeitliche Strukturierung des eingestrahlten Lichts (Taktung, zeitliche Modulation) erfolgt. Ebenso könnte räumlich und zeitlich derselbe Bereich der Fahrzeugoberfläche von mehreren Paaren von sich entsprechenden Komponentengruppen analysiert werden, sofern eine Trennung (bei der Datenerfassung oder in der Auswertung) nach anderen optischen Eigenschaften erfolgt, z.B. nach Frequenz oder Polarisation.

Beispielsweise kann das Beleuchtungssystem eine erste Beleuchtungseinheit umfassen, die eingerichtet ist, das fahrende Fahrzeug mit erstem Licht zu beleuchten, welches monochromatisches, polarisiertes, sichtbares Licht ist (z.B. grünes Licht), und eine zweite Beleuchtungseinheit umfassen, die eingerichtet ist, das fahrende Fahrzeug mit zweitem Licht zu beleuchten, welches monochromatisches Licht einer anderen Frequenz als der des ersten Lichts ist (Infrarotlicht) und welches räumlich strukturiert ist, z.B. durch ein zweidimensionales Muster (Gittermuster, Karomuster oder dergleichen). Die erste und zweite Beleuchtung können gleichzeitig erfolgen. Komponenten des Sensorsystems (Sensoreinheiten bzw. Sensorelemente) können die erste Beleuchtung und die zweite Beleuchtung dann spektral trennen, z.B. durch entsprechende Spektralfilter, und unterschiedliche Bilddaten erzeugen, die jeweils der Erkennung unterschiedlicher Schadensarten (Kratzer, Delle) dienen. Die Verwendung von Infrarotlicht für räumlich strukturierter Beleuchtung kann auch deshalb vorteilhaft sein, weil eine räumliche Strukturierung von sichtbarem Licht den Fahrer des Fahrzeugs bei der Durchfahrt durch die Vorrichtung irritieren könnte, weil z.B. Licht- und Schattenanteile eines Gittermusters wie ein Flackern wahrgenommen werden könnten.

Die Betriebsparameter des Sensorsystems können an Betriebsparameter des Beleuchtungssystems anpassbar sein, z.B. durch das Auswertesystem. Das Auswertesystem kann eingerichtet sein, als Steuersystem für das Sensorsystem und/oder das Beleuchtungssystem zu fungieren. Beispielsweise könnten elektrisch veränderliche Polarisationsfilter im Beleuchtungssystem koordiniert mit elektrisch veränderlichen Polarisationsfiltern im Sensorsystem konfiguriert und verändert werden, z.B. im Hinblick auf einen Polarisationswinkel linear polarisierten Lichts. Ist ein Beleuchtungslicht des Beleuchtungssystems zeitlich strukturiert, können Komponenten des Sensorsystems entsprechend eingerichtet sein oder angesteuert werden, Bilddaten ebenfalls mit passender zeitlicher Strukturierung aufzunehmen. Dies könnte z.B. bei einem optischen Lock-in-Verstärkersystem erfolgen und eine Unterdrückung des Hintergrundlichts zum Ziel haben. Eine ähnliche Einrichtung bzw. Anpassbarkeit kann für eine räumliche Strukturierung (auch "wandernde" räumliche Strukturierung) und eine Strukturierung im Frequenzspektrum bzw. in der Polarisation gelten. Auch kann das eingestrahlte Beleuchtungslicht zeitlich moduliert werden und eine Bildfolge vom Fahrzeug sowohl bei eingeschaltetem Beleuchtungslicht als auch bei ausgeschaltetem Beleuchtungslicht aufgenommen werden. Der stets gleich vorhandene Anteil von Hintergrundlicht am gesamten, einfallenden Licht folgt nicht der zeitlichen Modulation, und kann durch Verarbeitung der Bildfolge unterdrückt werden, z.B. durch Fouriertransformation und Filterung des vom Hintergrundlicht herrührenden Anteils. Durch die oben genannten Maßnahmen kann der Einfluss von Lichtanteilen, die vom Hintergrundlicht herrühren, reduziert werden und somit die anschließende Bildauswertung zur Schadenserkennung vereinfacht und zuverlässiger gestaltet werden.

Neben einer Abstimmung auf die Beleuchtung (Beleuchtungswinkel/Blickwinkel und vieles mehr) bzw. einer Abstimmung auf den Einsatzzweck können Komponenten des Sensorsystems in ihrer räumlichen Anordnung zueinander registriert sein, d.h., ihre Position und Orientierung (Blickwinkel) im Raum sind dem Auswertesystem bekannt. Beispielsweise können Arrays von registrierten Kameras eingesetzt sein, die mehrere Linsen unterschiedlicher Brennweite und ggf. unterschiedlicher Lichtfilterung zum Einsatz je nach Fahrzeugfarbe umfassen. Aus den Bilddaten solcher Sensorsysteme kann das Auswertesystem auch Tiefeninformation ableiten, und insbesondere durch Fotogrammetrie eine Tiefenkarte ("Z-depth") des Fahrzeugs erstellen, aus der Strukturabweichungen (verzogene Karosserie usw.) und Dellen erkannt werden können.

Das Sensorsystem ist zum Erfassen von Bilddaten von dem fahrenden Fahrzeug eingerichtet. Dabei ist das fahrende Fahrzeug beim Erfassen mindestens eines Teils der Bilddaten von dem Beleuchtungssystem beleuchtet. Aufgrund der Bewegung des Fahrzeugs ergibt sich ein maximaler Erfassungszeitraum, während dessen Bilddaten des fahrenden Fahrzeugs von dem Sensorsystem erfasst werden können. Dieser maximale Erfassungszeitraum kann z.B. bei einem Sensorabdeckungsbereich von 2 m Länge in Fahrzeugfahrtrichtung und einer Geschwindigkeit von 5 km/h (Schrittgeschwindigkeit) weniger als 3 Sekunden betragen. Nur während dieser Zeitspanne können vom Sensorsystem erfasste Bereiche der Fahrzeugoberfläche aufgenommen werden, um Bilddaten für die Schadenserkennung zu gewinnen. Die Vorrichtung kann eingerichtet sein, den Prozess der Bildaufnahme am ganzen Fahrzeug bzw. sogar den gesamten Prozess der Schadenserkennung in weniger als 30, weniger als 20, weniger als 10 oder gar weniger als 5 Sekunden durchzuführen. Die erfassten Bilddaten können in einem hochauflösenden Rohformat vorliegen und in diesem an das Auswertesystem übermittelt werden. Die Bildverarbeitung kann vollständig dem Auswertesystem überlassen sein, während das Sensorsystem z.B. keine immanente Filterung, Glättung oder gar Komprimierung der Rohdaten durchführt, wie sie oftmals in bekannten Überwachungskameras oder Smartphonekameras hardwaremäßig verbaut sind, aber für eine Schadenserkennung nachteilig sind. Die einzelnen als Sensorelemente dienenden Kameras des Sensorsystems können aber auch eine Vorverarbeitung ohne Glättung und Komprimierung durchführen, z.B. eine Bildverarbeitung zur Bewegungskompensation. Hierbei können die Kameras auf ihre genauen Betriebsparameter und sonstigen Eigenschaften bei jeder fraglichen Aufnahme zurückgreifen, einschließlich Blickrichtung, optische Einstellungen (Brennweite, Blende etc.), CCD-Array-Eigenschaften usw., die ansonsten erst der Auswerteeinheit zwecks Bildverarbeitung übermittelt werden müssten. Zu einer solchen Vorverarbeitung können die Kameras eigene eingebettete Hardware ("Central Processing Unit" =CPU und/oder "Graphical Processing Unit"=GPU) aufweisen. Auch bei einer solchen Vorverarbeitung können Bilder in einem ungeglätteten, unkomprimierten Rohdatenformat an die Auswerteeinheit gesendet werden.

Das Auswertesystem ist eingerichtet zum Verarbeiten der Bilddaten und zum Identifizieren eines Fahrzeugschadens. Die Bilddaten können direkt vom Sensorsystem empfangen worden sein. Das Auswertesystem und die gesamte Vorrichtung können vollautomatisch sein. Das Auswertesystem kann hierfür insbesondere eine künstliche Intelligenz einsetzen. Das Verarbeiten der vom Sensorsystem erfassten und an das Auswertesystem übermittelten Bilddaten kann umfassen: Bilddatenaufbereitung, Bilddatenkonvertierung, Artefakterkennung und -entfernung, Bilddatenregistrierung, Bilddaten-Stitching oder Bilddatenfusion, Fotogrammetrie, Tiefenkartenberechnung (Lichtfeldberechnungen). Dabei kann Bilddatenaufbereitung u.a. Filterung (z.B. Frequenzfilterung, Schwellwertfilterung), Maskierung (ggf. auf Basis eines Modells des Fahrzeugs) und ähnliches umfassen. Bilddatenkonvertierung kann z.B. eine Konvertierung von Farbbilddaten in Schwarz-weiß-Bilddaten umfassen (beispielsweise als letzten Schritt, bevor die künstliche Intelligenz die Schäden in den Bilddaten zu identifizieren versucht). Artefakterkennung kann die Erkennung von Fahrzeugkanten, Scheiben etc. umfassen, ggf. auf Basis eines Fahrzeugmodells, aber auch die Entfernung von ungewollten Reflexionen und dergleichen. Ungewollte Reflexionen können z.B. durch Hintergrundlicht entstehen. Solche ungewollten Reflexionen durch Hintergrundlicht können insbesondere durch Verarbeitung von mindestens zwei Bildern (ersten und zweiten Bilddaten), die denselben Bildbereich auf der Fahrzeugoberfläche bei verschiedenen Beleuchtungen zeigen, wobei mindestens eine Beleuchtung durch das Beleuchtungssystem bei der Aufnahme eines Bildes (der ersten Bilddaten) eingeschaltet war und bei der Aufnahme des anderen Bildes (der zweiten Bilddaten) ausgeschaltet war. Die Verarbeitung kann interne Feedback-Schleifen umfassen, z.B. Anwendung von bestimmten Arten der Bilddatenaufbereitung in Abhängigkeit von vorherigen Erkennungsergebnissen. Die Verarbeitung kann auch externe Feedback-Schleifen umfassen, bei denen das Auswertesystem in Abhängigkeit von erfolgten Verarbeitungsschritten (z.B. Erkennungsergebnissen) andere Systeme der Vorrichtung steuert. Beispielsweise könnte ein Bildbereich eine ungewollte Reflexion enthalten, die zwar als solche erkannt ist, die aber in dem Bereich, in dem sie auftritt, alles andere überstrahlt, so dass bei Beseitigung der Reflexion trotzdem keine Bildinformation an dieser Stelle verbleibt, aus der Schäden erkennbar wären. Das Auswertesystem kann nach einer solchen Artefakterkennung das Sensorsystem und ggf. das Beleuchtungssystem steuern, von dem Fahrzeug für den betroffenen Bildbereich eine weitere Aufnahme, ggf. mit anderen Betriebsparametern, anzufertigen. Die zusätzlichen Bilddaten können nach Bilddatenaufbereitung und -registrierung mit den ursprünglichen Bilddaten fusioniert werden, um ein vollständiges Bild zu erhalten, auf dem alle Details erkennbar sind, auch Schäden in dem vormals durch ungewollte Reflexion überstrahlten Bereich. Das Auswertesystem kann eingerichtet sein, einen Fahrzeugschaden in den verarbeiteten Bilddaten zu erkennen.

Das Sensorsystem kann Sensoren zur Messung der Position, Geschwindigkeit und/oder Beschleunigung des Fahrzeugs umfassen. Alternativ kann mindestens eine Größe aus Position, Geschwindigkeit und Beschleunigung des Fahrzeugs aus Bilddaten abgeleitet werden, z.B. indem das Fahrzeug schon bei der Einfahrt ohne spezielle Beleuchtung aufgenommen wird und die entsprechenden Bilddaten vom Auswertesystem analysiert werden. Dabei können auch Fahrzeugeigenschaften wie z.B. Farbe, Typ, Abmessungen, Form usw. abgeleitet werden, z.B. unter anderem durch eine Nummernschilderkennung. Das Sensorsystem kann eingerichtet sein, Bilddaten mindestens einer, insbesondere mehrerer registrierter Sensorelemente (Kameras) über den Erfassungszeitraum hinweg wiederholt zu senden, wobei die Bilddaten z.B. Gesamtansichten des Fahrzeugs sein können und insbesondere so beschaffen sind, dass aus ihnen Position, Geschwindigkeit und ggf. Beschleunigung des Fahrzeugs ableitbar sind (optische Tracking-Sensorik). Das Sensorsystem kann eine Kommunikationseinheit umfassen zur Datenübertragung zu und von dem Fahrzeug, insbesondere eine drahtlose Kommunikationseinheit. Das Fahrzeug kann seine Fahrzeugeigenschaften, und ggf. auch Daten zu seinem Bewegungszustand wie Geschwindigkeit und/oder Beschleunigung, an die Kommunikationseinheit übertragen. Das Sensorsystem kann entsprechend eingerichtet sein, (Sensor-)Daten zu den Fahrzeugeigenschaften und/oder dem Bewegungszustand des Fahrzeugs an das Auswertesystem zu senden. Das Auswertesystem kann eingerichtet sein, aus diesen Sensordaten (Bilddaten oder andere Form von Daten) die entsprechenden Fahrzeugeigenschaften und/oder den Bewegungszustand abzuleiten. Die Fahrzeugeigenschaften und/oder der Bewegungszustand des Fahrzeugs können von dem Auswertesystem verwendet werden, um die Bilddaten auszuwerten, z.B. indem der Bewegungszustand verwendet wird, um zu verschiedenen Zeitpunkten aufgenommene Bilddaten in Relation zu setzen, oder indem aus dem Fahrzeugtyp auf vorgesehene Kanten der Karosserie geschlossen und diese in Bilddaten zur Referenzierung verwendet, bzw. als mögliche Schäden ("Dellen") ausgeschlossen werden.

Das Auswertesystem kann auch eingerichtet sein, um das Beleuchtungssystem und/oder das Sensorsystem auf Basis dieser Fahrzeugeigenschaften und/oder des Bewegungszustands zu konfigurieren oder anzupassen, insbesondere vor dem Erfassungszeitraum und/oder während des Erfassungszeitraums, in welchem Bilddaten des fahrenden Fahrzeugs durch das Sensorsystem erfasst werden. Dabei ist die zeitliche Länge des Erfassungszeitraums kleiner oder gleich dem maximalen Erfassungszeitraum. Der Zeitraum für ein solches Feedback ist also ggf. sehr kurz. Beispielsweise kann das Auswertesystem das Beleuchtungssystem aufgrund einer erkannten Fahrzeugfarbe, bzw. eines bestimmten Fahrzeugtyps konfigurieren, Licht einer bestimmten Wellenlänge oder bestimmter Wellenlängen und ggf. bestimmter Polarisation auszusenden, so dass Schäden besonders gut im Vergleich zur Fahrzeugfarbe hervortreten oder ggf. der Unterlack besonders gut zum Leuchten angeregt wird. Das Auswertesystem kann eingerichtet sein, aus Sensordaten zum Bewegungszustand des Fahrzeugs die voraussichtliche Fahrspur zu errechnen und ggf. bei Eintreffen weiterer solcher Sensordaten die Vorhersage zu aktualisieren/zu verbessern. Das Auswertesystem kann eingerichtet sein, bildgebende Sensoreinheiten oder Sensorelemente des Sensorsystems auf Basis der errechneten voraussichtlichen Fahrspur und ggf. auf Basis der Kenntnis der Abmessungen des Fahrzeugs zu konfigurieren, z.B. Brennweiten zu konfigurieren oder anzupassen, um scharfe Abbildungen der Fahrzeugoberfläche zu erhalten. Als anderes Beispiel kann das Auswertesystem eingerichtet sein, aus ersten gewonnenen Bilddaten Kandidatenbereiche der Fahrzeugoberfläche zu identifizieren, in denen potentiell Schäden vorliegen könnten, und daraufhin das Beleuchtungssystem und/oder das Sensorsystem anzupassen, diese Kandidatenbereiche erneut mit veränderten Parametern zu beleuchten, bzw. zu erfassen, um die Bilddatenqualität lokal zu verbessern und die Schadenserkennung in den Kandidatenbereichen zuverlässiger zu machen.

Das Auswertesystem kann eine Algorithmik umfassen, welche die Verarbeitung der erfassten Bilddaten und/oder die Identifikation eines Fahrzeugschadens durchführt, wobei das Auswertesystem insbesondere zur Schadenserkennung künstliche Intelligenz umfassen kann. Die künstliche Intelligenz kann durch Bilddaten trainiert sein, die mindestens dieselbe (hohe) Qualität wie die Bilddaten haben, die vom Sensorsystem erfasst werden. Das Auswertesystem kann eingerichtet sein, einen erkannten Schaden zu lokalisieren, d.h. die entsprechenden Bilddaten in Beziehung zu einem Gesamtbild des fahrenden Fahrzeugs zu setzen. Das Auswertesystem kann eingerichtet sein, einen erkannten Schaden zu klassifizieren, d.h. seine Art (Delle, Kratzer etc.) und ggf. seine Schwere (qualitative Kategorien wie "schwerer Kratzer" bzw. "leichter Kratzer" und/oder quantitative Angaben zu schadenscharakterisierenden Größen wie "Länge des Kratzers", "Breite des Kratzers", "Tiefe des Kratzers") zu bestimmen. Das Auswertesystem kann eingerichtet sein, einen erkannten Schaden zu annotieren. Dies kann beispielsweise dadurch erfolgen, dass ein dem erkannten Schaden zugeordneter Textdatensatz erstellt wird, in dem der Schaden beschrieben wird, oder dadurch dass Metadaten erstellt werden, die Pixeln zugeordnet sein können und einen erkannten Schaden in den Bilddaten leichter erkennbar machen. Die Ausgabe des Auswertesystems kann ein vollständiger Oberflächenatlas des fahrenden Fahrzeugs (mit oder ohne Unterboden) sein, in dem lokalisierte, klassifizierte und annotierte Schäden eingetragen sein können.

Die Vorrichtung kann ein Lichtreduktionssystem umfassen. Das Lichtreduktionssystem kann eingerichtet sein, den Einfluss von Hintergrundlicht (Umgebungslicht) auf die erfassten Bilddaten zu reduzieren. Hintergrundlicht ist das nicht vom Beleuchtungssystem der Vorrichtung erzeugte Licht, z.B. Sonnenlicht oder Parkhausbeleuchtung. Um den Einfluss des Hintergrundlichts zu reduzieren, kann das Lichtreduktionssystem eingerichtet sein, das Hintergrundlicht vom Sensorsystem abzuschirmen. Das Lichtreduktionssystem kann eine passive, abschirmende Lichtreduktionseinheit umfassen, z.B. in Form eines Tunnels. Das Lichtreduktionssystem kann alternativ oder zusätzlich eingerichtet sein, den Einfluss des Hintergrundlichts durch eine aktive Lichtreduktionseinheit zu reduzieren, z.B. in Form einer optischen Lock-in-Verstärkereinheit, die das Beleuchtungssystem und das Sensorsystem steuert. Eine solche aktive Lichtreduktionseinheit kann zumindest teilweise in das Auswertesystem integriert sein. Alternativ kann das in das Auswertesystem integrierte Lichtreduktionssystem, bzw. der in das Auswertesystem integrierte Teil des Lichtreduktionssystems das Beleuchtungssystem und das Sensorsystem steuern, so dass die Beleuchtung zeitlich moduliert und die Erfassung von Bilddaten mit der Modulation koordiniert wird, und kann die aufgenommenen Bilddaten der Modulation entsprechend auswerten, beispielsweise mittels Fouriertransformation und Filterung. Eine derartige Reduzierung des Einflusses von Hintergrundlicht auf die Bilddaten ist ein Beispiel für eine Auswertung von ersten und zweiten Bilddaten desselben Fahrzeugbereichs (gleicher Bildbereich) bei unterschiedlicher Beleuchtungssituation.

Das Lichtreduktionssystem kann das Hintergrundlicht (Umgebungslicht) reduzieren, das von dem Sensorsystem empfangen wird. Dabei kann das Lichtreduktionssystem direkt die Hintergrundlichtmenge reduzieren, die das Sensorsystem erreicht. Das Lichtreduktionssystem kann ein passives Lichtreduktionssystem sein, das keine eigene Energie verbraucht, z.B. ein Tunnel vor und hinter dem Beleuchtungssystem und dem Sensorsystem, wobei der Tunnel beispielsweise aus Paneelen mit lichtabsorbierender Beschichtung und/oder lichtausbreitungshemmender, dreidimensionaler Oberflächenstruktur bestehen kann. Alternativ oder zusätzlich kann der Einfluss von Hintergrundlicht auf die Billdaten vermindert werden, aber nicht, indem das Hintergrundlicht bereits gehindert wird, das Sensorsystem zu erreichen. Hierzu kann das Lichtreduktionssystem ein aktives Lichtreduktionssystem sein, welches selbst Energie verbraucht. Beispielsweise kann das Lichtreduktionssystem eine optische Lock-in-Verstärkereinheit umfassen, die das Beleuchtungssystem steuert, Belichtungen mit einer bestimmten Frequenz durchzuführen, und das Sensorsystem steuert, Bilddaten korreliert zu den Belichtungszeitpunkten zu erfassen. Die Lock-in-Verstärkereinheit kann eine in das Auswertesystem eingebettete Softwaresteuereinheit und Softwareanalyseeinheit sein. Der Einfluss des Hintergrundlichts kann durch die Lock-in-Technik aus den Bilddaten herausgerechnet werden. Dies geschieht, indem der Bildsensor auf die zeitliche Modulation des eingestrahlten Lichts gelockt wird und nur jene Lichtanteile des vom Sensor empfangenen Lichts verstärkt werden, welche zur Taktfrequenz und Phasenlage der zeitlichen Modulation passen. Die bestimmte Taktfrequenz kann so hoch sein, dass sie für das menschliche Auge und damit insbesondere für einen Fahrer des Fahrzeugs nicht wahrnehmbar ist, also z.B. größer als 100 Hz, insbesondere größer als 600 Hz oder größer als 1 kHz. Das Lichtreduktionssystem könnte auch das Beleuchtungssystem steuern, Belichtungen mit einer bestimmten Frequenz durchzuführen, und das Sensorsystem steuern, Bilddaten korreliert zu den Belichtungszeitpunkten und auch zu weiteren, dazwischenliegenden Referenzzeitpunkten zu erfassen. Durch Softwareanalyse der erfassten Bilddaten bei unterschiedlichen Beleuchtungssituationen kann dann das nicht der bestimmten Frequenz folgende Hintergrundlicht herausgerechnet werden, z.B. durch Verfahren, die Fouriertransformation umfassen. Zum Beispiel kann mit einer Fouriertransformation der vom Hintergrundlicht stammende Signalanteil in den Bilddaten gegenüber dem durch die zeitliche Modulation der Beleuchtung zeitlich variierenden Signalanteil in den Bilddaten getrennt und anschließend herausgefiltert werden. Das Lichtreduktionssystem kann eingerichtet sein, die Lichtintensität des Hintergrundlichts tatsächlich (d.h. am Sensorsystem) oder rechnerisch (d.h. in den Bilddaten) auf diese Weisen um einen Faktor von mindestens 5, mindestens 10, mindestens 20 oder sogar mindestens 100 zu reduzieren. Durch diese Reduzierung des Hintergrundlichts bzw. des Einflusses des Hintergrundlichts in den Bilddaten werden störende, vom Hintergrund stammende Lichtanteile, wie z.B. Reflexionen, in den Bilddaten herausgenommen, was die anschließende Bildauswertung vereinfacht und die Zuverlässigkeit bei der Schadensermittlung verbessert.

Die hierin beschriebene Vorrichtung kann durch die speziellen Licht-/Beleuchtungstechniken, unter Umständen einschließlich der Reduktion des Einflusses von Hintergrundlicht, und durch die darauf abgestimmten und ggf. während des Erfassungszeitraums weiter angepassten Sensoreinstellungen hochqualitative, hochaufgelöste und für die Erkennung jeweiliger Schadensarten optimierte Bilddaten von sich bewegenden Fahrzeugen liefern, also von großen, dreidimensionalen Objekten mit komplexen Oberflächen, deren Bewegung eine enge Zeitbeschränkung für die Aufnahme und ggf. die Auswertung der Bilddaten bedeutet. Hierbei kann die Vorrichtung mit den beschriebenen speziellen Beleuchtungs- und Sensortechniken eine stärkere Hintergrundlichtsunterdrückung erlauben im Vergleich zu einer Vorrichtung, die gewöhnliche Beleuchtung wie die von Glühbirnen einsetzen würde, und profitiert auch überproportional von den beschriebenen Möglichkeiten der Hintergrundlichtsunterdrückung. Dies kann unter anderem daran liegen, dass das Hintergrundlicht von den speziellen Beleuchtungen des Beleuchtungssystems leichter trennbar ist, nämlich direkt an den Sensorelementen (z.B. durch Filter) und/oder in den Bilddaten (z.B. durch Vergleich von ersten und zweiten Bilddaten, die denselben Bildbereich bei unterschiedlicher Beleuchtungssituation darstellen). Besondere Vorteile können sich daher beispielsweise ergeben, wenn Aufnahmen für die Erkennung unterschiedlicher Schadensarten (Delle, Kratzer) simultan bei überlagerten, verschiedenen Beleuchtungen erfolgen. Sind die Sensorelemente (Kameras), die die Bilddaten aufnehmen, hierbei keine handelsüblichen Kameras, die schon hardwareseitig Glättungen und ggf. Kompressionen der Bilddaten durchführen, sondern speziell entwickelte Kameras (ggf. mit eigener eingebetteter Hardware wie CPU und GPU), die ein spezifisches Rohdatenformat liefern, kann dies insbesondere für Schadenserkennung durch künstliche Intelligenz weiter vorteilhaft sein. Eine solche Qualität der Bilddaten von fahrenden Fahrzeugen geht über das hinaus, was z.B. durch bekannte Überwachungskameras möglich und aus dem Stand der Technik bekannt ist. Auf dieser Datenqualität aufbauend ist eine Verarbeitung der Bilddaten und vollautomatische Schadenserkennung in nicht gekannter Detailschärfe (kleine und kleinste Schäden) und mit großer Zuverlässigkeit möglich, z.B. durch Einsatz einer oder mehrerer mit den hochqualitativen und vorverarbeiteten Bilddaten trainierten künstlichen Intelligenz/en.

Nachfolgend werden mögliche Details der einzelnen Systeme der Vorrichtung beschrieben, wobei die Komponenten der Systeme die bereits genannten Funktionen sowie weitere Funktionen ausführen können. Jede beschriebene Funktion soll auch als mögliches Verfahrensmerkmal eines Verfahrens zur Erkennung eines Fahrzeugschadens an einem fahrenden Fahrzeug verstanden sein, welches insbesondere, aber nicht notwendigerweise, durch die diesbezüglich beschriebene Komponente eines Systems der Vorrichtung ausgeführt werden mag. Die Systeme der Vorrichtung können jeweils einzelne oder alle der nachfolgend beschriebenen Merkmale aufweisen.

### Beleuchtungssystem

Das Beleuchtungssystem umfasst mehrere Beleuchtungseinheiten. Beleuchtungseinheiten können funktionale Untersysteme des Beleuchtungssystems sein. Beispielsweise kann eine erste Beleuchtungseinheit monochromatisches, polarisiertes Licht emittieren zum Zwecke der Aufnahme von Bilddaten für Kratzererkennung, eine zweite Beleuchtungseinheit kann unterschiedliches monochromatisches, räumlich strukturiertes Licht emittieren zum Zwecke der Aufnahme von Bilddaten für Dellenerkennung, eine dritte Beleuchtungseinheit Licht zum Zwecke der Aufnahme von Bilddaten für die Erkennung von Unterbodenstrukturschäden und so weiter. Entsprechend können Beleuchtungseinheiten räumlich getrennt angeordnet sein, zeitlich getrennt operieren und/oder ihre jeweilige von der Fahrzeugoberfläche reflektierte Beleuchtung auf andere Art von anderen Beleuchtungen trennbar sein, z.B. über unterschiedliche Frequenz oder Polarisation.

Eine Beleuchtungseinheit kann eingerichtet sein, einen Flächenbereich im Wesentlichen homogen auszuleuchten. Beispielsweise kann die Beleuchtungseinheit eingerichtet sein, die Lichtintensitätsschwankungen in dem Flächenbereich kleiner als 10% der mittleren Lichtintensität zu halten. Eine solche Beleuchtungseinheit wird hierin als Flächenleuchteinheit bezeichnet. Der Flächenbereich kann größer sein als 1, 2, 4, 8 oder mehr Quadratmeter. Eine Beleuchtungseinheit kann ein Beleuchtungselement oder mehrere Beleuchtungselemente umfassen. Die Beleuchtungselemente können in einem Array angeordnet sein bzw. eine regelmäßige Anordnung bilden. Das Array/die regelmäßige Anordnung von Beleuchtungselementen kann eine Größe von mehr als 1, 2, 4, 8 oder mehr Quadratmeter haben, gemessen als Fläche zwischen den äußersten, einen Rand bildenden Beleuchtungselementen. Die Beleuchtungseinheit kann z.B. mindestens 100, 500 oder noch mehr Beleuchtungselemente enthalten. Die Arrayanordnung der Beleuchtungselemente einer Beleuchtungseinheit kann so gestaltet sein, dass eine Flächenleuchteinheit gebildet wird. Dabei kann die Beleuchtungseinheit eingerichtet sein, Licht unter einem vorgegebenen oder vorgebbaren Winkelbereich abzustrahlen, monochromatisches Licht abzustrahlen und/oder Licht einer vorgegebenen oder vorgebbaren Polarisation abzustrahlen. Das Beleuchtungssystem umfasst eine erste Beleuchtungseinheit, die eingerichtet ist, das fahrende Fahrzeug mit erstem Licht zu beleuchten. Das erste Licht ist polarisiertes Licht.

Das erste Licht kann sichtbares Licht sein. Das Beleuchtungssystem umfasst eine zweite Beleuchtungseinheit, die eingerichtet ist, das fahrende Fahrzeug mit zweitem Licht zu beleuchten, das von dem ersten Licht verschieden ist. Das zweite Licht kann monochromatisches Licht einer anderen Frequenz als der Frequenz des ersten Lichts sein. Das zweite Licht ist Infrarotlicht. Das zweite Licht ist ebenfalls räumlich strukturiert, insbesondere räumlich zweidimensional strukturiert sein (z.B. ein Gitter- oder Streifenmuster aufweisen). Die erste und/oder zweite Beleuchtungseinheit kann aus einem Array von Beleuchtungselementen bestehen. Die erste und/oder zweite Beleuchtungseinheit kann eine Flächenleuchteinheit sein.

Ein Beleuchtungselement kann ein Leuchtmittel umfassen, z.B. als Teil einer Leuchte. Ein Leuchtmittel kann eine Gasdampflampe sein, z.B. eine Natriumdampflampe, oder eine Leuchtdiode (LED), eine Laserdiode, eine Resonant-Cavity Light Emitting Diode (RC-LED) oder eine organische Leuchtdiode (OLED) sein. Ein Leuchtmittel kann ein monochromatischer Emitter sein. Alternativ kann ein Leuchtmittel ein polychromatischer Emitter sein. Ein Beleuchtungselement kann eingerichtet sein, Licht unter einem vorgebbaren Winkelbereich zur beleuchteten Oberfläche oder Geometrie abzustrahlen, insbesondere zur beleuchteten Fahrzeugoberfläche.

Ein Beleuchtungselement kann mindestens einen Polarisationsfilter umfassen. Ein Polarisationsfilter kann ein linearer oder zirkulärer Polarisationsfilter sein. Ein Polarisationsfilter kann eine feste Polarisation aufweisen oder kann ansteuerbar sein, um die Polarisation zu verändern, z.B. um den Polarisationswinkel einer linearen Polarisation zu ändern. Ein Polarisationsfilter kann beispielsweise ein akustooptisch einstellbares Filter (acousto-optic tunable filter (AOTF)) oder ein einstellbares Flüssigkristall-Filter (liquid crystal tunable filter (LCTF)) sein. Polarisationsfilter können in einer oder mehreren Ebenen vor einem Leuchtmittel angeordnet sein, so dass das Licht polarisiert wird, bevor es auf das Fahrzeug auftrifft. Alternativ kann die Beleuchtungseinheit für alle oder eine Gruppe von ihr zugehörigen Beleuchtungselementen einen gemeinsamen Polarisationsfilter aufweisen, der die vorgenannten Eigenschaften haben kann. Eine Beleuchtung mit polarisiertem Licht kann vorteilhafterweise insbesondere für die Aufnahme von Bilddaten verwendet werden, aus denen Kratzer im Fahrzeug erkannt werden sollen.

Ein Beleuchtungselement kann dazu ausgelegt sein, ein fahrendes Fahrzeug zeitlich strukturiert zu beleuchten. Insbesondere kann das Beleuchtungssystem einen zeitlichen Modulierer umfassen, der dazu ausgelegt ist, Beleuchtungselemente des Beleuchtungssystems zeitlich (diskret) zu steuern, und insbesondere Beleuchtungselemente, die einer Beleuchtungseinheit zugehören, gemeinsam zeitlich (diskret) zu steuern. Zeitlich strukturiert beleuchten bezieht sich auf einen zeitlich geregelten bzw. zeitlich abhängigen, sich wiederholenden An- und Aus-Zustand eines Beleuchtungselements oder aus einer zeitlichen Modulation der Lichtintensität des Beleuchtungselements. Der An- und Aus-Zustand kann sich beispielsweise auf eine Taktfrequenz beziehen, mit der das Beleuchtungselement wiederholt an- oder ausgeschaltet wird. Es können aber auch mehrere Taktfrequenzen überlagert genutzt werden, um einen entsprechenden Zustand eines Beleuchtungselements zu ändern. Die Taktfrequenzen liegen vorzugsweise über 100 Hz, so dass sie für das menschliche Auge nicht erkennbar sind, wie z.B. bei über 1 kHz. Der zeitliche Modulierer kann vom Auswertesystem gesteuert werden, z.B. indem ihm Taktfrequenzen und/oder Zeiträume für die zeitliche Strukturierung vorgegeben werden. Mehrere Beleuchtungseinheiten, Gruppen von Beleuchtungselementen verschiedener Beleuchtungseinheiten, Gruppen von Beleuchtungselementen derselben Beleuchtungseinheit und/oder einzelne Beleuchtungselemente des Beleuchtungssystems können jeweils zueinander zeitlich synchronisiert sein, so dass die Beleuchtungseinheiten bzw. die Beleuchtungselemente Licht im Gleichtakt emittieren oder in einer festen zeitlichen Korrelation zueinander emittieren. Die zeitliche Strukturierung kann zum einen der Reduktion des Einflusses von Hintergrundlicht in den Bilddaten dienen (z.B. Lock-in-Verstärker-Technik oder Fouriertransformations- und Filtertechnik). Zum anderen könnte sie der zeitlichen Trennung verschiedener Beleuchtungseinheiten oder verschiedener Beleuchtungselemente innerhalb einer Beleuchtungseinheit dienen (z.B. schnell abwechselnde Beleuchtung mit (Gruppen von) Beleuchtungselementen, die Licht unterschiedlicher Polarisation und/oder Wellenlänge aussenden).

Daneben kann eine zeitliche Trennung von Beleuchtungseinheiten oder von Gruppen von Beleuchtungselementen einer Beleuchtungseinheit durch einmaliges Ein- bzw. Ausschalten der Beleuchtungseinheit bzw. der Gruppe von Beleuchtungselementen erfolgen, während andere Beleuchtungselemente zum fraglichen Einschaltzeitraum ausgeschaltet sind. Einfaches, einmaliges Ein-/Ausschalten wird aber hier nicht als zeitliche Modulation verstanden. Ein zeitlich getrenntes Operieren durch abgestimmtes, einmaliges Ein-/Ausschalten verschiedener Beleuchtungselemente, Gruppen von Beleuchtungselementen oder verschiedener Beleuchtungseinheiten wird hierin als Beleuchtungssequenz bezeichnet. Innerhalb der Abschnitte der Beleuchtungssequenz kann zeitliche Strukturierung des Lichts stattfinden. Das Beleuchtungssystem kann einen Sequenzer aufweisen, der gemäß Anweisungen der Auswerteeinheit eine Beleuchtungssequenz schaltet. Sequenzer und zeitlicher Modulierer können auch Funktionen eines Bauteils des Beleuchtungssystems sein.

Ein Beleuchtungselement oder eine Beleuchtungseinheit mit mehreren Beleuchtungselementen kann dazu ausgelegt sein, das fahrende Fahrzeug räumlich strukturiert zu beleuchten. Insbesondere kann das Beleuchtungselement, bzw. die Beleuchtungseinheit gemeinsam für ihre mehreren Beleuchtungselemente oder zumindest für eine Gruppe davon, einen räumlichen Strukturierer umfassen, der dazu ausgelegt ist, Licht, das vom Beleuchtungselement oder von Beleuchtungselementen der Beleuchtungseinheit emittiert wird, räumlich zu strukturieren, d.h. bestimmte Intensitätsvariationen des Lichts auf der von der Beleuchtungseinheit beleuchteten Fläche vorzugeben ("Licht- und Schattenmuster"). Ein geometrisches Beleuchtungsmuster, das sich aus sich wiederholenden geometrischen Formen zusammensetzen kann, wie beispielsweise Linien oder Kurven, ist beispielsweise räumlich strukturiert. Typischerweise können zwei oder mehr geometrische Formen kombiniert werden, um ein räumlich strukturiertes Beleuchtungsmuster auf dem fahrenden Fahrzeug zu erzeugen, z.B. ein Gittermuster oder Karomuster. Der räumliche Strukturierer kann ein flächiger Abschatter sein, der die Form des zu erzeugenden geometrischen Beleuchtungsmusters vorgibt, z.B. ein Gittermuster oder Karomuster. Der Abschatter kann z.B. aus zwei gekreuzten Polarisationsmitteln gebildet sein, deren lineare Polarisationen einen Winkel bilden, vorzugsweise senkrecht, um maximale Lichtabschattung in den Überlappbereichen der Polarisationsmittel und somit maximalen Kontrast zu erreichen. Die Überlappbereiche können das Beleuchtungsmuster vorgeben, z.B. ein Streifenmuster durch Verwendung eines vollflächigen Polarisationsmittels und eines senkrecht dazu verlaufenden, aus mehreren Streifen bestehenden Polarisationsmittels. Der Abschatter kann beweglich sein, um ein zeitlich veränderliches ("wanderndes") geometrisches Beleuchtungsmuster vorzugeben. Z.B. kann ein Polarisationsmittel gegenüber dem anderen beweglich sein (Translation und/oder Drehung). Alternativ können Beleuchtungselemente einer Beleuchtungseinheit in der Form des Beleuchtungsmuster angeordnet sein und eingerichtet sein, gemeinsam im Wesentlichen in eine Richtung abzustrahlen, um das Beleuchtungsmuster zu projizieren. Das Beleuchtungselement bzw. die Beleuchtungseinheit kann eingerichtet sein, eine räumlich kontrastreiche Strukturierung zu erzeugen. Dabei kann kontrastreich ein Lichtintensitätsverhältnis von Lichtbereichen zu Schattenbereichen von mindestens 10 bedeuten. Eine Beleuchtung mit räumlich strukturiertem Licht kann vorteilhafterweise insbesondere für die Aufnahme von Bilddaten verwendet werden, aus denen Dellen im Fahrzeug erkannt werden sollen.

Ein Beleuchtungselement oder eine Beleuchtungseinheit mit mehreren Beleuchtungselementen kann dazu ausgelegt sein, das fahrende Fahrzeug spektral strukturiert zu beleuchten. Insbesondere kann ein Beleuchtungselement oder eine Beleuchtungseinheit ein bestimmtes Spektrum emittieren oder ggf. einen spektralen Modulierer umfassen, der dazu ausgelegt ist, das emittierte Spektrum zu verändern, um das Fahrzeug mit Licht einer oder mehrerer Frequenzen/Wellenlängen oder mit Licht eines oder mehrerer Frequenzbereiche/Wellenlängenbereiche zu beleuchten. Spektral strukturiert bedeutet, dass ein Beleuchtungselement oder eine Beleuchtungseinheit dazu ausgelegt ist, Licht einer bestimmten oder mehrerer bestimmter Frequenzen/Wellenlängen zu emittieren. Ein Beleuchtungselement kann dazu ausgelegt sein, Licht mit einer bestimmten Frequenz oder Licht aus einem oder mehreren Lichtfrequenzbändern zu emittieren. Ein Beleuchtungselement kann ein monochromatischer Emitter sein, d.h. im Wesentlichen Licht einer Frequenz emittieren. Alle Beleuchtungselemente einer Beleuchtungseinheit können monochromatische Emitter derselben Frequenz sein. Eine solche Beleuchtungseinheit wird monochromatische Beleuchtungseinheit genannt. Es können aber auch Gruppen von Beleuchtungselementen einer Beleuchtungseinheit existieren, wobei die Beleuchtungselemente innerhalb einer Gruppe monochromatische Emitter derselben Frequenz sind. Solche Gruppen werden monochromatische Gruppen von Beleuchtungselementen genannt. Alle Beleuchtungselemente einer Beleuchtungseinheit können konstruktiv gleich sein. Es können aber auch Gruppen von Beleuchtungselementen existieren, wobei die Beleuchtungselemente innerhalb einer Gruppe konstruktiv gleich sind. Jede Gruppe kann z.B. ein Unterarray eines Arrays aller Beleuchtungselemente der Beleuchtungseinheit bilden. Verschiedene Gruppen können monochromatische Gruppen mit unterschiedlicher Lichtfrequenz sein. Die spektrale Strukturierung kann insbesondere von Fahrzeugeigenschaften wie z.B. der Fahrzeugfarbe gewählt sein, und das Auswertesystem kann die Beleuchtungseinheiten bzw. die Beleuchtungselemente einzeln oder in Gruppen entsprechend ansteuern, um das gewählte Frequenzspektrum zu erzeugen, ggf. auch noch mit zeitlicher und/oder räumlicher Strukturierung. Eine Beleuchtung mit spektral strukturiertem Licht, insbesondere monochromatischem Licht, kann die Qualität der Bilddaten im Hinblick auf Kratzer- und Dellenerkennung verbessern.

Das Beleuchtungssystem kann eine oder mehrere Trägereinheiten umfassen. Eine Trägereinheit kann eingerichtet sein, eine oder mehrere Beleuchtungseinheiten zu tragen. Eine Trägereinheit kann Trägerelemente umfassen die ein Beleuchtungselement oder eine Gruppe von Beleuchtungselementen trägt. Die Trägerelemente können Befestigungsmittel für die Beleuchtungselemente umfassen. Trägereinheiten können mechanisch miteinander verbunden sein. Mechanisch verbundene Trägereinheiten können einen Durchfahrtsbogen für das Fahrzeug bilden. Alternativ kann die Vorrichtung einen Basisrahmen umfassen, an dem die Trägereinheiten angebracht sind, um z.B. den Durchfahrtsbogen zu bilden. Trägereinheiten bzw. der Basisrahmen können ausgelegt sein, mechanische Stabilität zu geben und können z.B. aus Metall oder Kunststoff sein. Eine Trägereinheit kann mindestens so groß wie die Beleuchtungseinheit(en) sein, die sie trägt. Die Trägereinheiten und/oder die Trägerelemente können dynamische oder statische Trägereinheiten bzw. Trägerelemente sein. Eine dynamische Trägereinheit kann beispielsweise eine mit einem Antriebselement ausgestattete Trägereinheit sein, das die Position und/oder Orientierung der Trägereinheit im Raum verändern kann, z.B. gemäß einer Steuerung seitens des Auswertesystems. Beispielsweise kann eine dynamische Trägereinheit gedreht werden, um den Beleuchtungswinkel aller von ihr getragenen Beleuchtungseinheiten oder Beleuchtungselemente gemeinsam zu ändern. Eine dynamisches Trägerelement kann entsprechend durch ein eigenes Antriebselement in Position und/oder Orientierung verändert werden, z.B. durch Steuerung seitens des Auswertesystems, und zwar unabhängig von der Trägereinheit. Wird ein Trägerelement beispielsweise gedreht, verändert sich nur der Beleuchtungswinkel der vom Trägerelement getragenen Beleuchtungselemente gemeinsam. Eine statische Trägereinheit kann beispielsweise eine fest, z.B. im Boden oder einer Gebäudestruktur, verankerte Trägereinheit sein. Statische und dynamische Trägereinheiten können auch kombiniert sein. Ein Durchfahrtsbogen für das Fahrzeug kann von mehreren mechanisch verbundenen, aber alternativ auch von nur einer einzigen Trägereinheit gebildet sein. Der Durchfahrtsbogen und entsprechend die Trägereinheit(en), die ihn bilden, kann dimensioniert sein, um dem Fahrzeug die Durchfahrt zu gestatten, und kann dimensioniert sein, neben dem Fahrzeug noch einen das Fahrzeug umgebenden Luftraum zu umschließen. Die Form des Durchfahrtsbogens kann im Querschnitt zur Fahrtrichtung gekrümmt oder eckig sein, wobei ein planes, überfahrbares Unterbodensegment enthalten sein kann. Unterbodensegmente können Spurmarkierungen aufweisen, so dass Fahrzeuge mit Spurassistenten außer bei bewusster Gegenwirkung der Fahrer mittig durch den Durchfahrtsbogen fahren. Das macht es für Sensorelemente (Kameras) einfacher, ein scharfes Bild der Fahrzeugoberfläche aufzunehmen, weil Abstände zur Fahrzeugoberfläche weniger oft und weniger stark variieren. Das Unterbodensegment kann im Boden eingelassen sein, so dass kein Höhenversatz bei der Durchfahrt des Fahrzeugs durch die Vorrichtung gegeben ist. Das Unterbodensegment kann aber auch gegenüber dem Boden erhöht sein und z.B. durch Rampen befahrbar sein. Ein erhöhtes Unterbodensegment kann zur Begrenzung von Durchfahrtsgeschwindigkeiten dienen, z.B. um Durchfahrtsgeschwindigkeiten auf unter 30 km/h zu begrenzen. Der Durchfahrtsbogen kann zwei Seitensegmente, ein Topsegment und ein Unterbodensegment umfassen, die z.B. jeweils aus einer oder mehreren Trägereinheiten bestehen können, insbesondere aus flachen Trägereinheiten. Für die Schadenserkennung an Automobilen/Personenkraftwagen können die Seitensegmente z.B. Längen von 1-4 Metern und Höhen von 2,5 bis 5 Metern aufweisen, z.B. 2 Meter mal 4 Meter. Das Topsegment kann z.B. Längen von 1-4 Metern und Breiten von 3 bis 6 Metern aufweisen, z.B. 2 Meter mal 5 Meter. Entsprechendes gilt für das Bodensegment, wenn vorhanden.

Die Trägereinheit(en) kann/können dem Beleuchtungssystem und dem Sensorsystem gemeinsam sein. Das heißt, auch die Sensoreinheiten mit ihren Sensorelementen können an den Trägereinheiten des Beleuchtungssystems befestigt sein. Sensoreinheiten, Gruppen von Sensorelementen oder einzelne Sensorelemente können entweder von statischen Trägerelementen getragen sein oder durch dynamische Trägerelemente getragen und damit beweglich sein, z.B. drehbar oder schwenkbar.

Die Trägereinheiten können statische Trägereinheiten sein, wobei jeweils zwei aneinander angrenzende Trägereinheiten einen Winkel zueinander bilden können, Die von vorderen Trägereinheit getragene Beleuchtungseinheit kann dann insbesondere die Vorderseite des Fahrzeugs bei der Durchfahrt beleuchten, die von der mittleren Trägereinheit getragene Beleuchtungseinheit die Seiten des Fahrzeugs und die von der hinteren Trägereinheit getragene Beleuchtungseinheit die Rückseite des Fahrzeugs.

### Sensorsystem

Das Sensorsystem umfasst mehrere bildgebende Sensoreinheiten. Eine Sensoreinheit kann ein oder mehrere Sensorelemente umfassen, insbesondere ein oder mehrere bildgebende Sensorelemente. Ein bildgebendes Sensorelement kann eine Kamera sein, insbesondere eine Fotokamera, wobei die Kamera optische Komponenten wie Linsen, Blenden und Filter aufweisen kann. Eine Sensoreinheit kann genau eine Kamera umfassen, kann aber auch mehrere Kameras umfassen. Beispielsweise kann eine Sensoreinheit eine erste Kamera aufweisen, die auf die Aufnahme monochromatischen ersten Lichts ausgelegt ist (z.B. monochromatisches sichtbares Licht), und eine zweite Kamera aufweisen, die auf die Aufnahme monochromatischen zweiten Lichts ausgelegt ist, das vom ersten Licht verschieden ist (z.B. monochromatisches Nahinfrarotlicht). Die Kameras einer Sensoreinheit können so dicht beieinander angeordnet sein, dass sie nahezu dieselbe Position und denselben Blickwinkel haben. Auf diese Weise können verschiedene Bilddaten desselben Bildbereichs unter nahezu demselben Blickwinkel zeitgleich erfasst werden. Die Sensoreinheiten oder Sensorelemente (Kameras) können in einem Array angeordnet sein. Alternativ könnten sie randomisiert angeordnet sein.

Das Sensorsystem kann eine Sensoreinheit zur Fahrzeugidentifizierung umfassen. Die Sensoreinheit zur Fahrzeugidentifizierung kann eine Überwachungskamera oder gewöhnliche Fotokamera aufweisen, die ohne spezielle Beleuchtung Bilddaten eines einfahrenden Fahrzeugs zu erfassen vermag. Die Sensoreinheit zur Fahrzeugidentifizierung kann am Eingang der Vorrichtung, d.h. an dem bezüglich der Fahrtrichtung des Fahrzeugs vorderen Ende der Vorrichtung, angebracht sein und/oder orientiert sein, ein Fahrzeug vor Einfahrt in die Vorrichtung zu erfassen. Die Sensoreinheit zur Fahrzeugidentifizierung kann durch eine Kontaktschwelle aktivierbar sein. Diese Kontaktschwelle kann eingerichtet sein, bei Überfahrt des Fahrzeugs ein Signal an das Auswertesystem schickt, welches dann die Sensoreinheit zur Fahrzeugidentifizierung aktiviert. Das Auswertesystem kann eingerichtet sein, die Bilddaten der Sensoreinheit zur Fahrzeugidentifizierung auszuwerten, eine das Fahrzeug identifizierende Eigenschaft abzuleiten und daraus festzustellen, ob das einfahrende Fahrzeug für den Dienst der Schadenserkennung registriert ist. Für Letzteres kann das Auswertesystem z.B. einen Datenbankzugriff vornehmen.

Die Sensoreinheit zur Fahrzeugidentifizierung kann eingerichtet sein, die gesamte Vorderansicht des einfahrenden Fahrzeugs zu erfassen. Die das Fahrzeug identifizierende Eigenschaft kann das Fahrzeugkennzeichen des Nummernschilds sein. Die das Fahrzeug identifizierende Eigenschaft kann daher auch in optischen Markierungen bestehen, z.B. Schriftzügen, Bildern oder optischen Codes ggf. an spezifischen Positionen auf der Fahrzeugoberfläche. Die Sensoreinheit zur Fahrzeugidentifizierung kann eingerichtet sein, nur einen speziellen Teil der Vorderansicht des einfahrenden Fahrzeugs aufzunehmen, z.B. nur den Teil, auf dem die optischen Markierungen angebracht sind, nicht jedoch das Nummernschild. Der aufgenommene Teil der Vorderansicht des einfahrenden Fahrzeugs kann so beschaffen sein, dass eine Fahrzeugidentifikation nicht möglich ist, wenn in dem aufgenommenen Teil die optischen Markierungen nicht vorhanden sind. Dies kann dem Datenschutz von Führern und Haltern nicht am Dienst beteiligter Fahrzeuge dienen. Das Auswertesystem kann eingerichtet sein, bei positiver Feststellung der Dienstregistrierung des Fahrzeugs (d.h., das Fahrzeug ist für den Dienst der Schadenserkennung registriert) weitere Sensoreinheiten und das Beleuchtungssystem zu aktivieren, die bei negativer Feststellung in einem Schlafzustand belassen werden. Diese Funktion wird hierin kurz mit "Aktivierung der Vorrichtung" bezeichnet, auch wenn ein Teil der Vorrichtung dauerhaft aktiv ist, um den Rest aufzuwecken.

Ist eine positive Feststellung über die Registrierung des Fahrzeugs für den Dienst der Schadenserkennung erfolgt (Dienstregistrierung), kann das Auswertesystem eine erweiterte Fahrzeuganalyse durchführen. Die erweiterte Fahrzeuganalyse kann die Bestimmung von Datenelementen zu weiteren Fahrzeugeigenschaften (z.B. Marke, Model, Farbe(n), Fahrzeugkennzeichen, Mietinformation und ggf. auch eine bestehende Schadenskarte des Fahrzeugs) umfassen und/oder die Bestimmung von Datenelementen zum Bewegungszustand des Fahrzeugs umfassen (z.B. aktuelle Position, Geschwindigkeit und/oder Beschleunigung relativ zur Vorrichtung, Orientierung/Ausrichtung relativ zur Vorrichtung). Das Auswertesystem kann eingerichtet sein, zur erweiterten Fahrzeuganalyse, insbesondere zur Bestimmung besagter Datenelemente zu weiteren Fahrzeugeigenschaften, auf eine Datenbank zurückzugreifen. Zur Bestimmung der Datenelemente kann das Auswertesystem die Bilddaten der Sensoreinheit zur Fahrzeugidentifizierung (erneut) auswerten. Können solche Datenelemente nicht oder nicht vollständig aus den bestehenden Bilddaten bestimmt werden, können weitere Bilddaten aufgenommen werden, insbesondere zum Bewegungszustand. Der Bewegungszustand kann verfolgt werden ("tracking"), also wiederholt ermittelt werden.

Das Sensorsystem kann eine Sensoreinheit oder mehrere Sensoreinheiten zur erweiterten Fahrzeuganalyse umfassen, z.B. eine oder mehrere ggf. dreh- oder schwenkbare Überwachungskamera(s), oder das Auswertesystem kann eingerichtet sein, die Sensoreinheit zur Fahrzeugidentifizierung umzukonfigurieren, um eine erweiterte Fahrzeuganalyse vorzunehmen. Ist eine positive Feststellung über die Registrierung des Fahrzeugs für den Dienst der Schadenserkennung erfolgt (Dienstregistrierung), kann das Auswertesystem die Sensoreinheit(en) zur erweiterten Fahrzeuganalyse aktivieren, bzw. die Sensoreinheit zur Fahrzeugidentifizierung zur erweiterten Fahrzeugerfassung umkonfigurieren. Ist beispielsweise zuvor nur ein spezieller Teil der Vorderansicht aufgenommen worden, kann die Sensoreinheit zur Fahrzeugidentifizierung oder eine Sensoreinheit zur erweiterten Fahrzeuganalyse eine Gesamtansicht des Fahrzeugs aus ihrem (aktuellen) Blickwinkel aufnehmen, ggf. wiederholt und ggf. unter Änderung des Blickwinkels gemäß Maßgabe des Auswertesystems. Das Auswertesystem kann eingerichtet sein, auf Basis der von ihr bestimmten, weiteren Datenelemente Anpassungen der Vorrichtung (Beleuchtung, Auswahl/Konfiguration weiterer Sensoreinheiten und Sensorelemente usw.) vorzunehmen.

Alternativ oder zusätzlich kann das Sensorsystem eine Kommunikationseinheit aufweisen, insbesondere eine drahtlose Kommunikationseinheit. Die Kommunikationseinheit kann eingerichtet sein, mit einer korrespondierenden Kommunikationseinheit des Fahrzeugs in Kommunikationsverbindung zu treten und mindestens ein Datenelement zu empfangen, welches es dem Auswertesystem erlaubt festzustellen, ob das Fahrzeug für den Dienst der Schadenserkennung registriert ist. Das Fahrzeug meldet sich in diesem Fall sozusagen für den Dienst an und eine optische Bilderfassung und daraus abgeleitete Fahrzeugidentifizierung ist in diesem Fall nicht unbedingt notwendig. Die Kommunikationsverbindung kann über gängige Standards erfolgen, z.B. Funkstandards (GSM, UMTS, LTE und LTE-Advanced/5G, Bluetooth, WLAN), Infrarotstandards (IrDA) oder Nahfeldkommunikationsstandards (NFC).

Daneben kann die Kommunikationseinheit eingerichtet sein, nach der Fahrzeugregistrierung für den Dienst der Schadenserkennung ("Dienstregistrierung oder "Fahrzeuganmeldung") weitere Datenelemente von der korrespondierenden Kommunikationseinheit des Fahrzeugs zu empfangen. Diese weiteren Datenelemente können Datenelemente umfassen, die weitere Fahrzeugeigenschaften beschreiben, z.B. Marke, Model, Farbe, Fahrzeugkennzeichen, Mietinformation und ggf. auch eine Schadenskarte des Fahrzeugs. Solche Datenelemente können einmalig übermittelt und empfangen werden. Die weiteren Datenelemente können auch Datenelement umfassen, die den Bewegungszustand des Fahrzeugs beschreiben, z.B. aktuelle Geschwindigkeit und aktuelle Beschleunigung, die von Sensoren des Fahrzeugs gemessen sind. Solche Datenelemente können wiederholt übermittelt und empfangen werden, um (ggf. nahezu kontinuierlich) die Bewegung des Fahrzeugs nachverfolgen zu können. Es kann also auch die erweiterte Fahrzeuganalyse über die Kommunikationseinheit stattfinden. Insbesondere für die Bestimmung von Datenelementen zum Bewegungszustand des Fahrzeugs und für seine Nachverfolgung ("tracking") können optische Erkennung und Nachverfolgung zusätzlich zum Empfang entsprechender Datenelemente durch das Kommunikationssystem durchgeführt werden. Dies erhöht die Zuverlässigkeit und Unabhängigkeit von der Datenverfügbarkeit und Datenqualität der Sensoren des Fahrzeugs. Die Vorrichtung/das Auswertesystem kann eingerichtet sein, zumindest die Fahrzeugfarbe aus Bilddaten zu bestimmen. Die Vorrichtung/das Auswertesystem kann eingerichtet sein, zumindest Positionen und/oder Orientierungen des Fahrzeugs relativ zur Vorrichtung aus Bilddaten zu bestimmen. Information über die Position/Orientierung des Fahrzeugs relativ zur Vorrichtung wird das Fahrzeug möglicherweise nicht selbst ermitteln, so dass eine Abfrage über Kommunikationssysteme ausscheiden kann. Die Vorrichtung/das Auswertesystem kann eingerichtet sein die voraussichtliche Fahrspur unter Verwendung mindestens einer ermittelten Position und/oder Orientierung zu bestimmen, ggf. unter Verwendung mindestens einer zugehörigen Geschwindigkeit und/oder Beschleunigung. Die Vorrichtung/das Auswertesystem kann eingerichtet sein, aus der voraussichtlichen Fahrspur und Fahrzeugeigenschaften, insbesondere Fahrzeugform und Fahrzeugabmessungen, die voraussichtlichen Abstände zwischen Sensorelementen und Bildbereichen auf der Fahrzeugoberfläche zu bestimmen. Die Vorrichtung/das Auswertesystem kann eingerichtet sein, Sensorparameter der Sensorelemente in Abhängigkeit der voraussichtlichen Abstände zu konfigurieren bzw. anzupassen, z.B. die Brennweiten der Sensorelemente. Brennweiten von Sensorelementen könnten auch durch Autofokus-Funktionen der einzelnen Sensorelemente angepasst werden.

Das Sensorsystem umfasst mehrere bildgebende Sensoreinheiten. Eine bildgebende Sensoreinheit kann ein Sensorelement oder mehrere Sensorelemente umfassen, die zur Erfassung von Bilddaten eingerichtet sind. Solche Sensorelemente können insbesondere Kameras sein. Die Sensorelemente einer bildgebenden Sensoreinheit können gemeinsam eingerichtet sein, Bilddaten zu erfassen, die für die Erkennung einer Schadensart, z.B. Kratzer oder Delle oder Fahrzeugstrukturschaden, optimiert sind, und können entsprechend auf dieselbe Beleuchtung durch Beleuchtungselemente des Beleuchtungssystems abgestimmt sein, z.B. durch zeitliche Koordination mit der Beleuchtung, aber auch z.B. durch Einsatz derselben Filter. Die Sensorelemente einer bildgebenden Sensoreinheit können alternativ eingerichtet sein, Bilddaten zu erfassen, die für die Erkennung unterschiedlicher Schadensarten optimiert sind.

Das Sensorsystem kann Sensoreinheiten oder Sensorelemente umfassen, die ein Kamerarray von Kameras bilden. Ein Kameraarray kann z.B. Kameras enthalten, die an Trägerelementen in einer Querschnittsebene senkrecht zur Fahrrichtung des Fahrzeugs um einen Durchfahrtsbogen herum befestigt sind. Die Kameras eines Kameraarrays können unterschiedliche Brennweiten und/oder unterschiedliche Blickwinkel zur Fahrzeugoberfläche aufweisen. Die Brennweiten können auf einen gewöhnlichen Abstand zur Fahrzeugoberfläche gewöhnlicher Fahrzeuge festgelegt sein und können unveränderlich sein. Alternativ können die Brennweiten veränderlich sein, z.B. durch das Auswertesystem aufgrund von errechneten voraussichtlichen Abständen zur Fahrzeugoberfläche für das gegenwärtig aufzunehmende fahrende Fahrzeug. Unterschiedliche Brennweiten könnt auch dazu dienen, um Tiefeninformation über den Abstand der Kamera zum Fahrzeug zu erhalten. Die Kameras eines Kameraarrays können denselben Typ von Filter verwenden. Beispielsweise kann ein erstes Kameraarray hochauflösende Kameras mit Infrarot-Cutoff-Filter enthalten, die während einer Beleuchtung durch monochromatisches, polarisiertes Licht aktiviert werden. Daraus können Bilddaten gewonnen werden, die besonders für die Erkennung von Kratzern vermittels künstlicher Intelligenz geeignet sind. Ein zweites Kameraarry kann Kameras mittlerer Auflösung mit schmalbandigen Bandpassfiltern enthalten, die während einer Beleuchtung mit monochromatischem, räumlich strukturiertem, hochkontrastigem Licht aktiviert werden. Daraus können Bilddaten gewonnen werden, die besonders für die Erkennung von Dellen vermittels künstlicher Intelligenz geeignet sind. Hierbei bedeutet der Begriff "hochauflösend" eine Auflösung von mehr als 3 Pixel pro Millimeter, bzw. mehr als 9 Pixel pro Quadratmillimeter, und eine mittlere Auflösung eine Auflösung von 0,5 Pixel pro Millimeter bzw. 0,25 Pixel pro Quadratmillimeter.

Ein Sensorelement kann ein oder mehrere optische Filterelemente zum Filtern des einfallenden Lichts umfassen. Ein Filterelement kann beispielsweise einen akustooptisch einstellbares Filter (acousto-optic tunable filter (AOTF)) oder ein einstellbares Flüssigkristall-Filter (liquid crystal tunable filter (LCTF)) sein. Ein Filterelement kann ein Polarisationsfilter unveränderlicher Polarisation oder ein einstellbares Polarisationsfilter umfassen. Ein Filterelement kann ein Spektralfilter umfassen. Das Spektralfilter kann z.B. ein optisches Tiefpassfilter sein, insbesondere ein Infrarot-Cutoff-Filter, oder ein optisches Bandpassfilter, z.B. ein schmalbandiges Filter, das ausgelegt sein kann, im Wesentlichen nur monochromatisches einer Frequenz durchzulassen, insbesondere vom Beleuchtungssystem emittiertes und von der Fahrzeugoberfläche zurückgestrahltes Licht. Ein Filterelement kann ein Spektralfilter umfassen, der ausgelegt ist, Scheinwerferlicht des Fahrzeugs herauszufiltern. Dies kann insbesondere dann vorteilhaft sein, wenn frontale Aufnahmen des Fahrzeugs gemacht werden und das Scheinwerferlicht eingeschaltet ist, was z.B. dann von Fahrzeugseite automatisch erfolgen kann, wenn es in der Vorrichtung (z.B. wegen der Verwendung eines Tunnels) aus Sicht von Fahrzeugsensoren zu dunkel ist. Das Filterelement kann zeitlich veränderlich ansteuerbar gestaltet sein, z.B. im Gleichtakt oder in Koordination mit der zeitlichen, räumlichen und/oder spektralen Struktur des Lichts, das von einem oder mehreren Beleuchtungselementen emittiert wird. Beispielsweise kann ein Polarisationsfilter zeitlich veränderlich ansteuerbar gestaltet sein, um vom Beleuchtungssystem emittiertes, polarisiertes Licht nach Reflektion an der Fahrzeugoberfläche durch verschiedene, diskrete Polarisationsrichtungen zu analysieren. Alternativ kann eine entsprechende Anzahl von Sensorelementen mit unveränderlichen Polarisationsfiltern verwendet werden. Dabei können z.B. drei lineare Polarisationsrichtungen (z.B. 0°, 45°, 90°) aufgenommen werden. Diese können getrennt in einem Bildformat kodiert werden (beispielsweise getrennt in die drei Farbkanäle eines Farbbildes, z.B. eines RGB-Bildes). Diese getrennt kodierten Bilddaten können dann verarbeitet werden, z.B. verglichen werden, und weiter analysiert werden. Die gewonnene Bildinformation aus unterschiedlich polarisiertem Beleuchtungslicht kann z.B. zur Unterscheidung feiner Kratzer von leichtem Schmutz vermittels künstlicher Intelligenz verwendet werden.

Ein Sensorelement, insbesondere eine Kamera, kann eine Linse oder ein eine Anordnung von Linsen umfassen. Die Linse bzw. Anordnung von Linsen kann eine Brennweite aufweisen. Die Brennweite kann z.B. zwischen 5 und mm liegen, insbesondere zwischen 10 und 60 mm, wie beispielsweise 15, 35 und 55 mm. Die Brennweite kann dynamisch anpassbar sein, z.B. gesteuert von der Auswerteeinheit. Hierzu kann entweder eine Anordnung von Linsen veränderlich sein (Zoomobjektiv) oder verschiedene Linsen oder Anordnungen von Linsen für ein Sensorelement verwendet werden. Statt von der Brennweite einer Linse bzw. einer Anordnung von Linsen wird auch von der Brennweite des Sensorelements gesprochen. Durch unterschiedliche Brennweiten können scharfe Bilder aufgenommen werden, selbst wenn sich Abstände zur Fahrzeugoberfläche für jedes Fahrzeug ändern mögen, z.B. weil es sich um unterschiedliche Fahrzeuge handelt oder weil gleiche Fahrzeuge andere Fahrspuren durch die Vorrichtung hindurch nehmen. Durch unterschiedliche Brennweiten können auch Bilddaten aufgenommen werden, aus denen Abstands- oder Tiefeninformation abgeleitet werden können.

Ein Sensorelement kann weitere optische Komponenten wie z.B. Blenden oder Shutter aufweisen.

Ein Sensorelement kann eine feste Orientierung bzw. einen festen Blickwinkel bezüglich der Vorrichtung haben und kann von einem statischen Trägerelement fixiert sein. Bei gewöhnlichen Fahrzeugformen ergeben sich dadurch auch für verschiedene Fahrzeuge ähnliche Blickwinkel auf Fahrzeugoberflächen, z.B. auf Seitenflächen (Türen, Kotflügel, Felgen), Dach oder Motorhaube usw. Ein Sensorelement kann auf denselben Trägereinheiten befestigt sein, auf denen auch Beleuchtungselemente befestigt sind, insbesondere solche Beleuchtungselemente, mit denen das Sensorelement zur Erzeugung von Bilddaten für die Erkennung spezifischer Schäden funktionell zusammenwirkt. Der Blickwinkel kann aber auch konfigurierbar/anpassbar sein, z.B. durch ein dynamisches Trägerelement, das das Sensorelement trägt und es drehen oder schwenken kann. Das Auswertesystem kann eingerichtet sein, den Blickwinkel eines Sensorelements zu konfigurieren. Dabei kann die Konfiguration des Blickwinkels auf Basis von ermittelten Fahrzeugeigenschaften wie z.B. Fahrzeugmodel erfolgen. Dadurch kann beispielsweise der für die Erkennung von einzelnen Schadensarten gewünschte Blickwinkel auf eine Fahrzeugoberfläche individuell für jedes Fahrzeug eingestellt werden. Beispielsweise kann für die Dellenerkennung eine Aufnahme senkrecht zur Fahrzeugoberfläche bei gleichzeitiger paralleler Beleuchtung mit monochromatischem, räumlich strukturiertem Licht gewünscht sein und entsprechend eingestellt werden, indem Trägerelemente (oder Trägereinheiten) von Sensorelementen und/oder Beleuchtungselementen entsprechend gedreht werden. Fixe Sensorelemente mit fester Orientierung hingegen können durch ihre einfacheren, statischen Trägerelemente von Vorteil sein. Ggf. kann auch nur eine gemeinsame Trägereinheit beweglich, z.B. drehbar sein, nicht jedoch einzelne Trägerelemente. Beispielsweise könnte ein ganze Trägereinheit mit Beleuchtungseinheit(en) die Form eines Beleuchtungspaneels haben und einschließlich davor angebrachten Sensorelementen (Kameras) um eine Achse drehbar sein, während alle auf dem Beleuchtungspaneel angebrachten Sensorelemente und Beleuchtungselemente fix bezüglich des Paneels angebracht sind. Hierdurch ergibt sich eine Anpassbarkeit ohne gleichzeitig stark erhöhte Komplexität von Bewegungsmechaniken und Steuerung.

Ein Sensorelement kann eine digitale Kamera sein, die Bilddaten in digitaler Form liefert, beispielsweise über ein CCD-Array. Das Sensorelement kann eine hochauflösende digitale Kamera sein, z.B. zur Erfassung von Bilddaten für die Kratzererkennung. Das Sensorelement kann eine digitale Kamera mittlerer Auflösung sein, z.B. zur Erfassung von Bilddaten für die Dellenerkennung. Das Sensorelement kann eingerichtet sein, Bilddaten im Rohformat an die Auswerteeinheit zu senden, wobei jegliche Bilddatenverarbeitung der Auswerteeinheit obläge. Dies kann jedoch zu sehr hohem Datenverarbeitungsaufwand in der Auswerteeinheit führen. Ein Sensorelement kann alternativ über eine eigene eingebettete CPU und/oder GPU verfügen, die die Rohbilddaten aufbereitet, bevor sie zur Auswerteeinheit gesendet werden. Die eingebettete CPU/GPU kann eingerichtet sein, durch die Fahrzeugbewegung verursachte Verschwimmung herauszurechnen, z.B. durch Berücksichtigung von Information über die Fahrzeugbewegung. Die in dem Sensorelement entsprechend vorverarbeiteten Bilddaten können in einem (proprietären) Rohdatenformat an die Auswerteeinheit gesendet werden, wobei das proprietäre Rohdatenformat unkomprimierte und/oder ungeglättete Bilddaten enthält.

Sensorelemente können miteinander synchronisiert sein und ebenso Gruppen von Sensorelementen oder Sensoreinheiten. Die Synchronisation kann eine gleichzeitige Erfassung von Bilddaten sein oder eine zeitlich korrelierte Erfassung von Bilddaten. Eine zeitliche Korrelierung kann z.B. die Geschwindigkeit des Fahrzeugs berücksichtigen, z.B. so dass derselbe Bildbereich auf der Fahrzeugoberfläche von verschiedenen Sensorelementen zu unterschiedlichen Zeiten aufgenommen werden kann. Zu den unterschiedlichen Zeiten kann z.B. die Beleuchtung verschieden sein kann und/oder die optischen Eigenschaften der verschiedenen Sensorelemente können verschieden sein, so dass Bilddaten mit unterschiedlichem Informationsinhalt über denselben Bildbereich auf der Fahrzeugoberfläche zur Verfügung gestellt werden. Die Sensorelemente können zur Datenkommunikation (z.B. für Steuerbefehle oder die Übermittlung von Bilddaten) mit der Auswerteeinheit und/oder untereinander verbunden sein. Die Auswerteeinheit kann eingerichtet sein, die Synchronisation von Sensorelementen zu steuern. Die Auswerteeinheit kann eingerichtet sein, alle Sensorelemente bildgebender Sensoreinheiten zu synchronisieren. Insbesondere können Sensorelemente oder Sensoreinheiten in einem Array synchronisiert sein. Synchronisierte Sensorelemente oder Sensoreinheiten, insbesondere die eines Arrays, können Bilddaten zum Zweck der Erkennung einer bestimmten Schadensart liefern und für die Erfassung ihrer Bilddaten mit einer passenden Beleuchtung synchronisiert sein. Sensorelemente oder Sensoreinheiten eines Arrays können in einer ersten Ebene senkrecht zur Fahrrichtung angeordnet sein. Diese Sensorelemente/Sensoreinheiten können z.B. zeitgleich Bilddaten erfassen. Sensorelemente/Sensoreinheiten anderer Arrays können in zweiten, dritten usw. Ebenen parallel zur ersten, d.h. ebenfalls senkrecht zur Fahrtrichtung, angeordnet sein. Sie können z.B. zeitlich korreliert zu anderen Zeitpunkten Bilddaten erfassen. Sensorelemente oder Gruppen von Sensorelementen, insbesondere Arrays von Sensorelementen, können mit Beleuchtungselementen bzw. Gruppen von Beleuchtungselementen/Arrays von Beleuchtungselementen synchronisiert sein. Entsprechendes gilt für Sensoreinheiten oder Gruppen/Arrays von Sensoreinheiten. Die Auswerteeinheit kann eingerichtet sein, die entsprechende Synchronisation von Komponenten des Beleuchtungssystems und des Sensorsystems vorzunehmen.

Das Sensorsystem kann mehr als 2 Sensorelemente aufweisen, mehr als 5 Sensorelemente, mehr als 10 Sensorelemente, oder mehr als 50 Sensorelemente. Das Sensorsystem kann weniger als 80 Sensorelemente, oder weniger als 60 Sensorelemente aufweisen. Die genannten Sensorelemente können Sensorelemente zur Aufnahme von Bilddaten sein. Ein Sensorelement kann eingerichtet sein, Bilddaten eines Bildes, z.B. durch Auslesen eines gesamten CCD-Arrays, in weniger als 8 ms, weniger als 5 ms oder weniger als 2,5 ms zu erfassen. Ein Sensorelement kann eingerichtet sein, Bilddaten eines Bildes in weniger als 1,6 ms oder weniger als 0,8 ms zu erfassen. Das Sensorelement kann eingerichtet sein, den Zeitraum zur Erfassung der Bilddaten eines Bildes mit einer Beleuchtung zu koordinieren, deren Frequenz f mehr als 50 Hz, mehr als 60 Hz, mehr als 100 Hz, mehr als 120 Hz, mehr als 200 Hz oder mehr als 240 Hz beträgt, z.B. 600 Hz oder 1200 Hz. Das bedeutet, das Sensorelement so eingerichtet sein, dass der Zeitraum für die Erfassung der Bilddaten eines Bildes kleiner als 1/(2f) sein kann und auf eine Hellphase oder eine Dunkelphase der Beleuchtung gelegt sein kann. Die Koordination von Sensorelement und Beleuchtung kann über das Auswertesystem stattfinden, ggf. aber auch durch direkte Koordination von Komponenten des Beleuchtungssystems und des Sensorsystems. Der Zeitraum für die Erfassung der Bilddaten eines Bildes kann auch auf andere Prozesse getaktet sein als auf die zeitliche Modulation einer Beleuchtung.

Sensorelemente können optische oder andere strahlungsbasierte Messverfahren verwenden. Beispiele für Sensorelemente, die optische Messverfahren verwenden, sind Kameras, wie IP-Kameras, Zeilenkameras, oder Lichtfeldkameras (plenoptische Kameras), Photodioden, CCD-Sensoren, CMOS-Sensoren, Hartmann.Schack-Sensoren, Lichtschranken, Scanner Kameras (Kameras mit einem Zeilensensor), oder Stereokameras. Beispiele für Sensorelemente, die strahlungsbasierte Messverfahren verwenden sind Infrarotsensoren oder UV-Sensoren, beispielsweise Sensoren, die elektromagnetische Wellen außerhalb des sichtbaren Spektrums messen. Es ist auch möglich, dass Sensorelemente z.B. haptische oder magnetische Messverfahren verwenden. Beispiele für Sensorelemente, die haptische Messverfahren verwenden sind beispielsweise dielektrische Elastomersensoren, die beispielsweise Verformungen, Kräfte und/oder Drücke messen können. Solche haptischen Sensorelemente könnten z.B. dazu dienen, bei Überfahrt des Fahrzeugs die Vorrichtung zu aktivieren oder um die Geschwindigkeit des Fahrzeugs zu messen. Beispiele für Sensorelemente, die magnetische Messverfahren verwenden sind Hall-Sensoren oder XMR-Sensoren. Daneben könnten auch Sensorelemente, die schallbasierte Messverfahren verwenden, eingesetzt werden, z.B. um das Motorengeräusch oder andere Geräusche des Fahrzeugs aufzunehmen. Solche Audiodaten können neben Bilddaten analysiert werden, um Hinweise auf Schäden zu erhalten (z.B. rhythmische Schlaggeräusche o.ä.). Beispiele für schallbasierte Sensorelemente sind Ultraschallsensoren, oder Mikrophone, die auf elektromagnetischer, elektrodynamischer, elektrostatischer, piezoelektrischer oder piezoresistiven Basis Schall in elektrische Signale wandeln. Es kann eine Kombination aus verschiedenen Sensorelementen mit unterschiedlichen Messverfahren eingesetzt werden. Ein Sensorelement kann eingerichtet sein, mindestens eine der folgenden Größen zu erfassen: Lichtintensität, Geschwindigkeit, Winkelgeschwindigkeit, Entfernung, Temperatur, Luftfeuchte. Ein Sensorelement kann eng mit einem Beleuchtungselement als Paar zusammenwirken, um beispielsweise einen Laserscanner aus Laser und Fotodiode zu bilden, der beispielsweise eine Entfernungsmessung ermöglicht, um den Abstand des Fahrzeugs zu messen und ggf. nachzuverfolgen, woraus das Auswertesystem eine Positionsbestimmung des Fahrzeugs vornehmen kann.

Das Sensorsystem kann eine Sensoreinheit mit Umgebungssensorelementen umfassen. Umgebungssensorelemente können Sensoren zur Temperaturmessung, zur Messung der Luftfeuchtigkeit und zur Intensität und zum Spektrum des Hintergrundlichts/Umgebungslichts sein. Das Auswertesystem kann eingerichtet sein, Bilddaten bzw. daraus abgeleitete Information auf Basis der Messungen der Umgebungssensorelemente zu korrigieren. Das Auswertesystem kann eingerichtet sein, Sensoreinheiten mit Kamera(s) als Sensorelement(en) auf Basis der Messungen der Umgebungssensorelemente zu konfigurieren, z.B. Filter der Kamera(s) anzupassen je nach Intensität und/oder Spektrum des Hintergrundlichts/Umgebungslichts, oder gar ein aktives Lichtreduktionssystem auf Basis der Messungen der Umgebungssensorelemente an- oder auszuschalten, z.B. indem der zeitliche Modulierer des Beleuchtungssystems aktiviert oder deaktiviert wird. Das Sensorsystem kann dedizierte Sensorelemente zur Messung des Bewegungszustands des Fahrzeugs umfassen, d.h. Sensorelemente, die keine Bilddaten an das Auswertesystem liefern, wie z.B. Lichtschranken oder Kontaktschwellen.

Bilddaten, die von einem ersten Sensorelement und einem zweiten Sensorelement erfasst werden, können um mindestens 5%, oder um mindestens 10%, oder um mindestens 15% überlappen. Die Bilddaten eines ersten Sensorelements und eines zweiten Sensorelements können um weniger als 30%, um weniger als 20%, oder um weniger als 10% überlappen. Überlappende Bilddaten verschiedener Sensorelemente können zu einem verbesserten Stitching von Bilddaten oder zu einer verbesserten Bilddatenfusion führen. Auf diese Weise kann die gesamte Fahrzeugoberfläche oder ein gewünschter Teil in einem Atlas oder gar einem Bild dargestellt werden, was die Lokalisation von Schäden vereinfachen kann. Da Bilddaten erfasste Bildbereiche der Fahrzeugoberfläche repräsentieren, wird hier kein Unterschied gemacht zwischen den sich überlappenden erfassten Bildbereichen und den korrespondierenden Bilddaten.

### Lichtreduktionssystem

Das Lichtreduktionssystem kann ein oder mehrere Lichtreduktionseinheiten umfassen. Eine Lichtreduktionseinheit kann ein oder mehrere Lichtreduktionselemente umfassen.

Die Vorrichtung kann mindestens eine Lichtreduktionseinheit umfassen, die eine passive Lichtreduktionseinheit ist. Eine passive Lichtreduktionseinheit ist eine Lichtreduktionseinheit, die ohne eigenen Energieaufwand Hintergrundlicht reduziert, das von dem Sensorsystem empfangen wird. Der Reduktionseffekt einer passiven Lichtreduktionseinheit kann auf den kumulierten Reduktionseffekten der umfassten Lichtreduktionselemente basieren. Eine passive Lichtreduktionseinheit kann z.B. ein Tunnelabschnitt sein. Enthält das Lichtreduktionssystem nur passive Lichtreduktionseinheiten so ist das Lichtreduktionssystem ein passives Lichtreduktionssystem. Ein Beispiel eines passiven Lichtreduktionssystems ist ein Tunnelabschnitt, der bezüglich der Fahrtrichtung des Fahrzeugs vor dem Beleuchtungs- und dem Sensorsystem liegt, und ein Tunnelabschnitt, der hinter dem Beleuchtungs- und dem Sensorsystem liegt, wobei die beiden Tunnelabschnitte ggf. zusammen mit dem Beleuchtungs- und Sensorsystem dazwischen einen Tunnel bilden können. Ein passives Lichtreduktionselement kann ein Paneel eines Tunnelabschnitts sein. Ein Lichtreduktionselement/Paneel kann mit einer lichtabsorbierenden Beschichtung beschichtet sein und/oder eine dreidimensionale Oberflächenstruktur aufweisen. Die dreidimensionale Oberflächenstruktur kann z.B. pyramidenartige Elemente aufweisen, die die Lichtausbreitung besonders in den Tunnel hinein hemmen und entsprechende Asymmetrien aufweisen können.

Eine passive Lichtreduktionseinheit in Form eines Tunnelabschnitts kann z.B. mindestens 2 Meter Länge aufweisen, z.B. mehr von 2-5 Meter, eine Höhe von 2,5 bis 5 Metern und eine Breite von 3 bis 6 Metern. Der Querschnitt senkrecht zur Fahrtrichtung kann ähnlich dem Querschnitt eines Durchfahrtbogens des Beleuchtungssystems und des Sensorsystems. Mit zwei solchen passiven Lichtreduktionseinheiten und dem Durchfahrtsbogen aus einer oder mehreren Trägereinheiten kann die Gesamtlänge der Vorrichtung z.B. von 5 bis 15 Meter sein.

Die Vorrichtung kann eine Lichtreduktionseinheit umfassen, die eine aktive Lichtreduktionseinheit ist. Aktiv heißt in diesem Zusammenhang, dass die Lichtreduktionseinheit unter Aufwendung von Energie funktioniert, beispielsweise mit elektrischem Strom.

Die aktive Lichtreduktionseinheit kann ein optischer Lock-in-Verstärker sein. Die optische Lock-in-Verstärkung geschieht, indem das auf das Fahrzeug eingestrahlte Licht zeitlich moduliert wird (z.B. an- und ausgeschaltet wird) und Sensorelemente auf diese Modulation eingelockt und verstärkt wird. Dies kann beispielsweise dadurch geschehen, dass das von einem Sensorelement aufgenommene Licht mit einem Signal entsprechend der Modulationsfrequenz multipliziert wird und das Ergebnis dieser Multiplikation nach einer Tiefpassfilterung verstärkt wird, oder indem das Ergebnis dieser Multiplikation mit einem DC-Verstärker verstärkt wird. Die aktive Lichtreduktionseinheit kann eine Fourieranalyse vornehmen, mit welcher im aufgenommen Bilddatenstrom nur diejenigen Signalanteile herausgefiltert werden, welche eine Frequenz entsprechend der zeitlichen Modulation des eingestrahlten Lichts aufweisen. Die aktive Lichtreduktionseinheit kann alternativ eingerichtet sein, Fouriertransformationen der aufgenommenen Bilddaten durchzuführen und den durch das Hintergrundlicht bedingten Anteil vor Rücktransformation herauszufiltern. Enthält das Lichtreduktionssystem nur aktive Lichtreduktionseinheiten ist es ein aktives Lichtreduktionssystem.

Sowohl bei der optischen Lock-In-Verstärker Technik als auch bei der FouriertransformationsTechnik werden von den aufgenommenen Bilddaten im Ergebnis nur jene Lichtanteile des vom Sensor empfangenen (und in der Regel vom Fahrzeug reflektierten) Lichts verstärkt, welche zur Taktfrequenz und/oder Phasenlage der zeitlichen Modulation passen, wodurch die Signalanteile des Hintergrundlichts unterdrückt und das Nutzsignal-Störsignal-Verhältnis signifikant erhöht wird. Durch eine solche Verbesserung des Nutzsignal-Störsignal-Verhältnisses wird die Qualität der aufgenommenen Bilddaten verbessert. Dies hat zur Folge, dass Bilddetails wie sehr kleine Kratzer oder Dellen besser aufgelöst sind, oder überhaupt aufgelöst sind, so dass z.B. eine künstliche Intelligenz (KI) des Auswertesystems auf die Erkennung derartiger Schäden hin trainiert werden kann, und ansonsten geringere Anforderungen an die erforderliche Größe des Trainingsdatensatzes bestehen. Versuche haben ergeben, dass beispielsweise mit Hilfe eines Lichtreduktionssystems, mit dem die Lichtintensität, bzw. der Signalanteil des Hintergrundlichts (Umgebungslichts) im Ergebnis um den Faktor 10 reduziert wird, die Größe des Trainingsdatensatzes bei gleichbleibender Zuverlässigkeit der Erkennung von Schäden um den Faktor 10 reduziert werden kann. Die Unterdrückung des Hintergrundlichts kann somit nicht nur überhaupt die Erkennung gewisser Schäden (kleine Kratzer und kleine, flache Dellen) ermöglichen, sondern auch mit viel kleineren Datensätzen zuverlässige Ergebnisse produzieren.

Der Reduktionseffekt des Lichtreduktionssystems kann eine Kombination aus den Reduktionseffekten der passiven und aktiven Lichtreduktionseinheiten sein. Insbesondere wenn hierin beschriebene, für die jeweiligen Schadensarten angepasste Beleuchtungen und entsprechende, für die jeweiligen Schadensarten angepasste Sensoren (z.B. mit spezieller Filterung) eingesetzt werden, kann ein Lichtreduktionssystem aber auch entbehrlich sein.

### Auswertesystem

Das Auswertesystem kann eine Auswerteeinheit umfassen. Eine Auswerteeinheit kann einem bestimmten funktionalen Zweck dienen. Eine Auswerteeinheit kann eigene, dedizierte Hardware aufweisen und/oder dedizierte Software aufweisen. Das Auswertesystem bzw. eine oder mehrere Auswerteeinheiten können mit Komponenten des Beleuchtungssystems und/oder des Sensorsystems zur Datenkommunikation verbunden sein. Das Auswertesystem bzw. eine oder mehrere Auswerteeinheiten können Bilddaten und ggf. andere hierin beschriebene Sensordaten vom Sensorsystem empfangen. Das Auswertesystem, bzw. eine oder mehrere Auswerteeinheiten, können eingerichtet sein, Komponenten des Beleuchtungssystems und/oder des Sensorsystems zu steuern, insbesondere durch Senden von Steuerbefehlen.

Das Auswertesystem kann eine Fahrzeuganalyseeinheit aufweisen. Typischerweise ist eine Fahrzeuganalyseeinheit dazu ausgelegt, ein Fahrzeug an einem oder mehreren Merkmalen zu erkennen. Die Fahrzeuganalyseeinheit kann dazu ausgelegt sein, das Fahrzeug anhand aufgenommener Sensordaten zu seiner Form, Farbe und/oder anderer Identifizierungsmerkmale zu identifizieren, wobei die Identifizierung insbesondere anhand von erfassten Bilddaten erfolgen kann. Identifizierungsmerkmale können auch ein oder mehrere am Fahrzeug angebrachten Marker sein wie beispielsweise ein Nummernschild, eine Automarke, aber auch ein Barcode oder ein elektromagnetischer ID-Geber, wie beispielsweise ein RFID-Chip. Das Identifizierungsmerkmal kann für das Sensorsystem sichtbar/detektierbar am oder im Fahrzeug angebracht sein.

Das Auswertesystem kann eine Fahrzeugdatenbank umfassen. Die Fahrzeuganalyseeinheit kann dazu ausgelegt sein zu erkennen, ob Daten zu einem Fahrzeug bereits in der Fahrzeugdatenbank vorhanden sind. Daten zu einem Fahrzeug können beispielsweise folgendes umfassen: die Fahrzeugmarke, das Fahrzeugmodell, das Nummernschild, etwaige erfasste Schäden am Fahrzeug oder Informationen zum Status des Fahrzeugs, wie beispielsweise Informationen zum Vermietungsstatus. Die Fahrzeuganalyseeinheit kann eingerichtet sein, auf die Fahrzeugdatenbank zuzugreifen, z.B. im Zuge einer erweiterten Fahrzeuganalyse, und Datenelemente zu Fahrzeugeigenschaften für andere Auswerteeinheiten zur Verfügung zu stellen.

Das Auswertesystem kann eine Steuereinheit für die Sensoreinheit zur Fahrzeugidentifizierung und ggf. für die Sensoreinheit(en) zur erweiterten Fahrzeuganalyse umfassen. Diese Steuereinheit kann Steuerbefehle zum Bewegen/Schwenken der besagten Sensoreinheit(en) senden, insbesondere um die Bewegung des Fahrzeugs zu nachzuverfolgen ("tracking"). Steuereinheiten des Auswertesystems sind als Auswerteeinheiten des Auswertesystems anzusehen.

Das Auswertesystem kann eine Fahrzeugbewegungszustandseinheit oder Fahrzeug-Tracking-Einheit aufweisen. Die Fahrzeugbewegungszustandseinheit oder Fahrzeug-Tracking-Einheit kann Sensordaten zum Bewegungszustand des Fahrzeugs (Position, Orientierung, Geschwindigkeit, Beschleunigung des Fahrzeugs) verarbeiten, insbesondere Bilddaten von der Sensoreinheit zur Fahrzeugidentifizierung und von Sensoreinheiten zur erweiterten Fahrzeuganalyse. Die Fahrzeugbewegungszustandseinheit oder Fahrzeug-Tracking-Einheit kann die Datenelemente der hierin beschriebenen erweiterten Fahrzeuganalyse ermitteln. Die Fahrzeugbewegungszustandseinheit kann eingerichtet sein, mindestens die Datenelemente zu mindestens einem Bewegungszustand zu ermitteln. Die Fahrzeug-Tracking-Einheit kann eingerichtet sein, die Datenelemente zum aktuellen und zu einem oder mehreren vergangenen Bewegungszuständen zu ermitteln, die eine bisherige Fahrspur repräsentieren können. Die Fahrzeugbewegungszustandseinheit und die Fahrzeug-Tracking-Einheit können eingerichtet sein, die Ermittlung zukünftiger Datenelemente zu voraussichtlichen zukünftigen Bewegungszuständen vorzunehmen (voraussichtliche Fahrspur). Die Fahrzeug-Tracking-Einheit erhält laufend weitere Sensordaten zum Bewegungszustand und kann eingerichtet sein, die Prognose der voraussichtlichen Fahrspur ständig anzupassen und zu verbessern und entsprechende zukünftige Datenelemente bereitzustellen. Die Fahrzeugbewegungszustandseinheit oder Fahrzeug-Tracking-Einheit kann ihre erzeugten Datenelemente Steuereinheiten zur Verfügung stellen, z.B. der Steuereinheit für die Sensoreinheit zur Fahrzeugidentifizierung und ggf. für die Sensoreinheit(en) zur erweiterten Fahrzeuganalyse oder Steuereinheiten, die das Beleuchtungssystem oder das Sensorsystem konfigurieren oder anpassen.

Das Auswertesystem kann eine Steuereinheit für das Beleuchtungssystem umfassen, die Beleuchtungseinheiten und Beleuchtungselemente konfigurieren oder anpassen kann, d.h. die Betriebsparameter dieser Komponenten zu setzen bzw. dynamisch zu ändern. Die Steuereinheit für das Beleuchtungssystem kann hierzu Datenelemente von anderen Auswerteeinheiten empfangen, z.B. von der Fahrzeugbewegungszustandseinheit oder Fahrzeug-Tracking-Einheit. Solche Datenelemente können z.B. die Fahrzeugfarbe oder Farbe/Eigenschaften des Unterlacks sein, auf Grundlage derer die Steuereinheit für das Beleuchtungssystem das Beleuchtungsspektrum festlegt und entsprechende (monochromatische) Beleuchtungseinheiten/Beleuchtungselemente aktiviert. Die Steuereinheit für das Beleuchtungssystem kann eingerichtet sein, das Frequenzspektrum in Abhängigkeit einer oder mehrere Fahrzeugeigenschaften zu wählen, wie z.B. Fahrzeugfarbe oder andere Lackeigenschaften des Oberlacks; Farbe, Reflexionseigenschaften oder andere Lackeigenschaften des Unterlacks; Reflexionseigenschaften des Karosseriemetalls. Entsprechende Informationen können bei der Fahrzeugidentifizierung oder erweiterten Fahrzeuganalyse festgestellt worden sein oder können aus entsprechenden Datenelementen abgeleitet werden. Insbesondere kann das Frequenzspektrum in Abhängigkeit der Fahrzeugfarbe gewählt werden. Die Steuereinheit für das Beleuchtungssystem kann eingerichtet sein, Beleuchtungselemente zeitlich zu synchronisieren, z.B. sie bei gleicher Frequenz mit gleicher Phasenlage beleuchten, also gleichzeitig an oder aus sind.

Das Auswertesystem kann eine Steuereinheit für das Sensorsystem umfassen, die Sensoreinheiten und Sensorelemente konfigurieren oder anpassen kann. Die Steuereinheit für das Sensorsystem kann hierzu Datenelemente von anderen Auswerteeinheiten empfangen, z.B. von der Fahrzeugbewegungszustandseinheit oder Fahrzeug-Tracking-Einheit. Solche Datenelemente können z.B. Datenelemente bezüglich der voraussichtlichen Fahrspur des Fahrzeugs sein, auf Grundlage derer die Steuereinheit für das Sensorsystem das Sensorparameter wie Brennweiten einstellen oder anpassen kann. Die Steuereinheit für das Sensorsystem kann eingerichtete sein, sämtliche veränderlichen Betriebsparameter von Komponenten des Sensorsystems, insbesondere optische Betriebsparameter wie z.B. Polarisationen von Polarisationsfiltern o.ä. vorzugeben bzw. anzupassen. Die Steuereinheit für das Sensorsystem kann eingerichtet sein, Sensoreinheiten bzw. Sensorelemente zeitlich miteinander zu synchronisieren, insbesondere Sensoreinheiten/Sensorelemente innerhalb eines Arrays.

Das Auswertesystem kann eine Meistersynchronisationseinheit umfassen. Die Meistersynchronisationseinheit kann eine zeitliche Referenz für alle zeitlichen Abläufe in der Vorrichtung bereitstellen. Die Meistersynchronisationseinheit kann Prozesse in anderen Steuereinheiten des Auswertesystems synchronisieren bzw. koordinieren, z.B. um Beleuchtungsvorgänge auf die Zeitpunkte zur Erfassung von Bilddaten abzustimmen. Die Meistersynchronisationseinheit kann auch die zeitliche Beleuchtungssequenz verschiedener Beleuchtungen durch das Beleuchtungssystem und die zeitliche Sequenz verschiedener Bildaufnahmeprozesse festlegen. Für diese Aufgaben kann sie anderen Steuereinheiten Steuerbefehle geben und Datenelemente mit anderen Auswerteeinheiten austauschen. Auf diese Weise können die Sensoreinheiten bzw. Sensorelemente Bilddaten unter ganz bestimmten Beleuchtungssituationen erfassen.

Das Auswertesystem kann eine Bildverarbeitungseinheit umfassen. Die Bildverarbeitungseinheit kann eingerichtet sein, die vom Sensorsystem erfassten Bilddaten (Rohbilddaten) zu verarbeiten. Die erfassten Bilddaten können vom Sensorsystem an das Auswertesystem gesendet werden oder können durch das Auswertesystem vom Sensorsystem abgerufen werden. Die Bildverarbeitungseinheit kann eingerichtet sein, für die Bildverarbeitung auf Datenelemente anderer Auswerteeinheiten zurückzugreifen. Beispielsweise können die Betriebsparameter der Beleuchtungseinheit(en) und die Betriebsparameter der Sensoreinheiten/Sensorelemente abgerufen werden, einschließlich der genauen Positionen und Blickwinkel der Sensoreinheiten/Sensorelemente (egal ob statisch oder veränderlich). Die genauen Positionen und Blickwinkel erlauben z.B. eine räumliche Registrierung der Sensoreinheiten/Sensorelemente, um dann die entsprechenden Bilddaten miteinander zu registrieren (Bilddatenregistrierung). Registrierte Bilddaten können z.B. für Fotogrammetrie oder für Tiefenkartenberechnung über Lichtfeldberechnungen ("Z-Depth") weiter verwendet werden, aber auch für Informationsverknüpfungsvorgänge wie Bildfusion oder Bild-Stitching. Die Verarbeitung von erfassten Bilddaten durch die Bildverarbeitungseinheit kann beispielsweise auch folgendes umfassen: Bilddatenaufbereitung, Bilddatenkonvertierung, Artefakterkennung und -entfernung, Bilddatenregistrierung. Bilddatenaufbereitung kann u.a. Filterung (z.B. Frequenzfilterung, Schwellwertfilterung), Maskierung (z.B. auf Basis von Datenelementen die das Fahrzeugmodell beschreiben) und ähnliches umfassen. Bilddatenkonvertierung kann z.B. eine Konvertierung von Farbbilddaten in Schwarz-weiß-Bilddaten umfassen (beispielsweise als letzten Schritt, bevor eine künstliche Intelligenz die Schäden in den Bilddaten zu identifizieren versucht). Artefakterkennung kann die Erkennung und Entfernung von Fahrzeugkanten, Scheiben etc. umfassen, ggf. auf Basis von Datenelementen, die das Fahrzeugmodell beschreiben, aber auch die Entfernung von ungewollten Reflexionen durch Hintergrundlicht. Artefakterkennung könnte aber auch die Erkennung und Entfernung von Altschäden aus den Bilddaten umfassen. Hierzu können Datenelemente (Bilddaten), die den bestehenden Fahrzeugatlas mit bekannten Altschäden darstellen, verwendet werden. Diese Datenelemente können aus der Fahrzeugdatenbank abgerufen worden sein oder ggf. über Kommunikationseinheiten aus einem Fahrzeugspeicher. Auf diese Weise könnten Altschäden für eine nachfolgende Schadenserkennung in den verarbeiteten Bilddaten unterdrückt werden, so dass das Auswertesystem nur die potentiellen Neuschäden zu identifizieren hätte (während eine Darstellung, Lokalisation und Annotation des Neuschadens letztlich wieder in ein Fahrzeugbild einzutragen wären, auf dem auch die Altschäden dargestellt sind, um wieder einen vollständigen Fahrzeugatlas zu erhalten). Alternativ können die Altschäden in den Bilddaten belassen werden und die Bewertung kann vollständig einer Schadenserkennungseinheit überlassen werden.

Das Auswertesystem kann eine Informationsverknüpfungseinheit umfassen, die eingerichtet ist Daten aus unterschiedlichen Informationsquellen zu verknüpfen. Die Informationsverknüpfungseinheit kann z.B. ein Bilddatenfusionselement umfassen zur Fusion von unterschiedlichen Bilddaten, die mindestens überlappende Bildbereiche auf der Fahrzeugoberfläche darstellen. Die Fusion kann im überlappenden Bereich ausgeführt werden ggf. unter räumlicher Anordnung der Teilbilder, wozu Bilddatenregistrierung verwendet werden kann. Auf diese Weise kann z.B. statt eines Fahrzeugatlas im herkömmlichen Sinn (mehrere zweidimensionale Bilder, die zusammen den Gesamteindruck der Fahrzeugoberfläche vermitteln) ein Fahrzeugatlas aus nur einem einzigen dreidimensionalen Bild geschaffen werden, das die gesamte bzw. zumindest die gesamte erfasste Fahrzeugoberfläche zeigt. Die Informationsverknüpfungseinheit kann aber auch ein Bilddaten-Stitching-Element umfassen, mit der eine feste räumliche Beziehung der einzelnen Bilder der Fahrzeugoberfläche hergestellt werden kann, wozu wiederum die Bilddatenregistrierung Verwendung finden kann. Der Fahrzeugatlas mag dann zwar mehrere Bilder umfassen, diese sind jedoch geordnet. Entsteht ein neuer Schaden kann es u.U. genügen, in einem solchen Fahrzeugatlas nur ein Bild auszutauschen, um ihn auf den neuesten Stand zu bringen. Fusion oder Stitching von Bilddaten stellen Formen von Bildverarbeitung dar und können vor der Schadenserkennung durchgeführt werden oder alternativ nach einer Schadenserkennung, die auf Grundlage der Einzelbilder erfolgt ist. Durch die Zusammenführung bzw. Verknüpfung von Bilddaten oder anderen Informationen kann die Erkennung von Schäden an einem Fahrzeug verbessert werden, insbesondere aber auch die Lokalisation von Schäden.

Das Auswertesystem kann eine Schadenserkennungseinheit umfassen. Die Schadenserkennungseinheit kann eingerichtet sein, einen Fahrzeugschaden auf Grundlage der erfassten Bilddaten zu erkennen, insbesondere auf Grundlage der erfassten, verarbeiteten Bilddaten. Die Schadenserkennungseinheit kann eingerichtet sein, potentielle Bildbereiche, die einen Fahrzeugschaden darstellen mögen, zu identifizieren. Sie kann eingerichtet sein zu bewerten, ob in diesen Bildbereichen ein Schaden vorliegt oder nicht, z.B. in Abgrenzung von leichter Verschmutzung. Die Bewertung kann den fraglichen Bildbereichen Wahrscheinlichkeiten für das Vorliegen eines Schadens zuordnen, wobei oberhalb eines gewissen Schwellwertes (z.B. 90%) ein Schaden als erkannt gilt. Unterhalb kann es einen Wahrscheinlichkeitsbereich geben (z.B. zwischen 60 und 90%), bei der ein Schadensvermutung vorliegt. Die Schadenserkennungseinheit kann eingerichtet sein, einen erkannten Schaden in den Bilddaten mit einer ersten Markierung zu markieren (z.B. rote Umrandung). Sie kann eingerichtet sein, einen vermuteten Schaden in den Bilddaten mit einer zweiten Markierung zu markieren, die unterschiedlich zur ersten Markierung ist (z.B. orangefarbene Umrandung). Die Schadenserkennungseinheit kann eingerichtet sein, einen erkannten Schaden bzw. einen vermuteten Schaden zu klassifizieren (z.B. in die Klassen "Kratzer", "Delle", "Strukturschaden" usw. einzuordnen), zu vermessen (Länge, Tiefe etc.) und/oder zu lokalisieren (d.h. die Lage in Bezug auf die gesamte erfasste Fahrzeugoberfläche festzustellen). Die Schadenserkennungseinheit kann eingerichtet sein, Bilddaten mit entsprechenden Informationen zu annotieren, ggf. auch mit weiteren Informationen wie z.B. Datum/Uhrzeit und Schadenswahrscheinlichkeit. Die Schadenserkennungseinheit kann eingerichtet sein, einen bestehenden Fahrzeugatlas zu aktualisieren, d.h. einen aktualisierten Fahrzeugatlas zu erstellen. Die Schadenserkennungseinheit kann für diese Vorgänge auf Datenbanken/Datenelemente anderer Auswerteeinheiten zugreifen. Die Schadenserkennungseinheit kann Auswerteelemente für die genannten Vorgänge umfassen, die künstliche Intelligenz verwenden. Beispielsweise kann eine Auswerteelement für die Schadenserkennung in den Bilddaten sich auf künstliche Intelligenz stützen. Künstliche Intelligenz des Auswertesystems bzw. der Schadenserkennungseinheit kann mit Bilddatensätzen trainiert sein, deren Qualität nicht geringer ist als die Bildqualität der durch die Vorrichtung am fahrenden Fahrzeug erfassten Bilddaten. Durch ein Training mit hochqualitativen Daten kann der Einsatz künstlicher Intelligenz im Auswertesystem eine sehr zuverlässige Schadenserkennung ermöglichen.

Das Auswertesystem kann eine Ausgabeeinheit aufweisen, mit der Bilddaten mit markierten und/oder annotierten Schäden ausgegeben werden können, insbesondere die Bilder des aktualisierten Fahrzeugatlas einschließlich identifizierter (Neu-)Schäden des Fahrzeugs. Die Ausgabeeinheit kann eingerichtet sein, diese Bilddaten z.B. auf einem Bildschirm oder einer anderen Anzeigeeinrichtung ausgeben. Erkannte Schäden aber auch vermutete Schäden können z.B. durch entsprechende Umrandungen hervorgehoben sein. Annotierungen zu klassifizierten Schäden können eingeblendet sein, z.B. Schadensart (Kratzer, Delle etc.) Größe und ggf. Tiefe. Die Ausgabeeinheit kann eingerichtet sein, diese Bilddaten lokal in der Vorrichtung zu speichern und/oder über ein Kommunikationssystem zu übertragen, beispielsweise unter anderem an das Fahrzeug zur Ablage in einem internen Fahrzeugspeicher und/oder zur Anzeige auf dem Bildschirm eines Fahrzeugbordcomputers. Die identifizierten und vermuteten (Neu-)Schäden können Mitarbeitern und/oder dem Fahrer des Fahrzeugs unmittelbar zur Kenntnis gebracht werden. Vermutete Schäden, die beispielsweise nicht hinreichend sicher von Verschmutzung unterschieden werden konnten, können daraufhin unmittelbar durch Wiedervorstellung des Fahrzeugs nach Reinigung der fraglichen Stellen des Fahrzeugs bestätigt oder ausgeschlossen werden. Dank der Lokalisation des Schadens können fragliche Stellen für Personen gut verständlich angezeigt werden, insbesondere wenn eine dreidimensionale Darstellung des Fahrzeugatlas zur Verfügung steht, so dass die Reinigung einfach und rein lokal z.B. mit einem Lappen erfolgen kann. Auf diese Weise können Streitfälle über das Vorliegen eines Neuschadens bei Abgabe eines Mietfahrzeugs vermieden oder zumindest deren Zahl verringert werden.

Das Auswertesystem kann eingerichtet sein, weitere hierin beschriebene Funktionen zu erfüllen und kann sich hierfür der genannten oder weiterer Auswerteeinheiten bedienen.

### Figurenbeschreibung

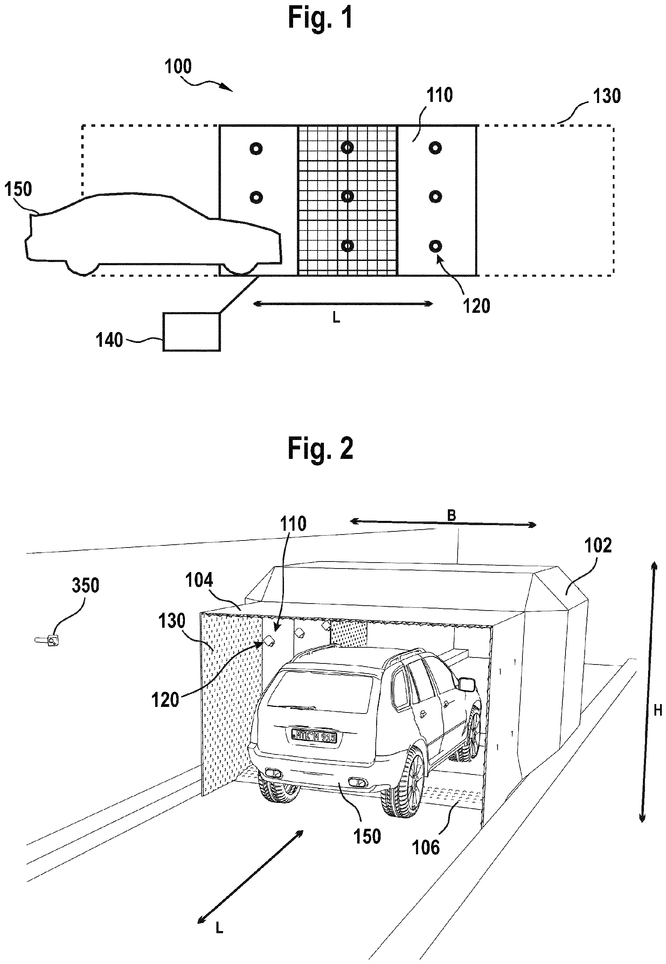

Fig. 1 zeigt schematisch den Aufbau einer Vorrichtung 100, die zur Schadenserkennung an einem fahrenden Fahrzeug 150 eingerichtet ist. Die Vorrichtung umfasst ein Beleuchtungssystem 110, ein Sensorsystem 120 und ein Auswertesystem 140. Daneben ist ein Lichtreduktionssystem 130 in Form eines das Hintergrundlicht absorbierenden Tunnels gezeigt. Die Systeme 110, 120, 130 bilden einen Durchfahrtsbogen bzw. Tunnel für das fahrende Fahrzeug 150, das sich in einer Fahrtrichtung bewegt, die im Wesentlichen gleich einer Längsrichtung L der Vorrichtung ist. Das Fahrzeug 150 fährt in der beispielhaften Darstellung von links in den Tunnel, durchfährt den Durchfahrtsbogen mit Komponenten des Beleuchtungssystems 110 und des Sensorsystems 120 und fährt rechts aus dem Tunnel heraus. Während der Durchfahrt durch den Durchfahrtsbogen wird das Fahrzeug vom Beleuchtungssystem 110 beleuchtet. Das Beleuchtungssystem kann dabei das fahrende Fahrzeug wie oben beschrieben beleuchten. Beleuchtung(en) durch das Beleuchtungssystem 110 kann/können dabei auf die Erfassung von Bilddaten durch das Sensorsystem 120 abgestimmt sein. Das Sensorsystem 120 erfasst Bilddaten, die zur Bildverarbeitung und zur Erkennung und Bewertung von Schäden an das Auswertesystem 140 weitergeleitet werden.

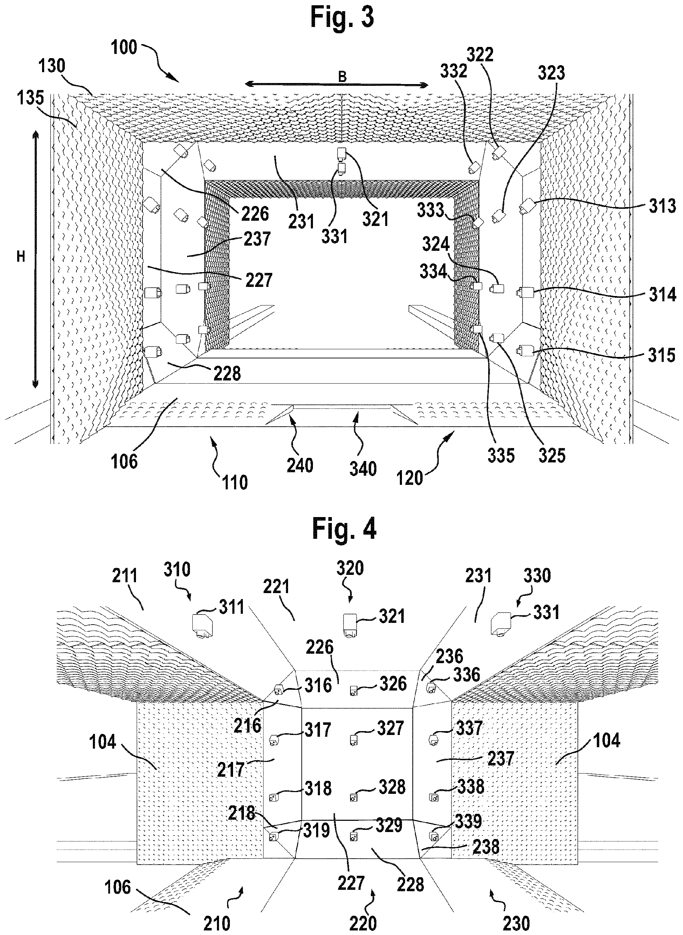

Figs. 2-4 zeigen beispielhaft eine Vorrichtung 100 zur Schadenserkennung an einem hindurchfahrenden Fahrzeug 150. Die Vorrichtung 100 weist ein Beleuchtungssystem 110 und ein Sensorsystem 120 auf. Beleuchtungseinheiten des Beleuchtungssystems 110 und Sensoreinheiten des Sensorsystems 120 bilden mit ihren zugehörigen Trägereinheiten einen Durchfahrtsbogen 102. Die Vorrichtung 100 weist eine Längsrichtung L, eine Breitenrichtung B und eine Höhenrichtung H auf. An den Durchfahrtsbogen 102 schließen sich beidseitig in Längsrichtung L Tunnelsegmente an, die passive Teile eines Lichtreduktionssystems 130 sind und einen Tunnel 104 bilden. Die Fahrtrichtung des Fahrzeugs 150 führt im Wesentlichen entlang der Längsrichtung L durch den Durchfahrtsbogen 102 und den Tunnel 104 hindurch.

Die Vorrichtung 100 kann ein Auswertesystem umfassen, welches in Figs. 2-4 aber nicht bildlich dargestellt ist.

Der Durchfahrtsbogen kann an seiner höchsten Stelle um die 4 Meter hoch sein und an seiner niedrigsten Stelle noch um die 3 Meter. Die Breite des Durchfahrtsbogens kann an der breitesten Stelle in der Mitte um die 5 Meter und an der engsten Stelle um die 4 Meter. Der Durchfahrtsbogen kann um die 3,5 Meter lang sein, die beiden Tunnelsegmente des Tunnels 104 jeweils mindestens um die 2 Meter lang. Die Tunnelsegmente können um die 4 Meter breit und 3 Meter hoch sein. Ein Unterbodensegment 106 kann um die 10 Zentimeter hoch und durch Auf- und Abfahrtsrampen befahrbar sein.

Die Vorrichtung 100 umfasst in diesem Beispiel ein Lichtreduktionssystem 130 mit passiven Lichtreduktionseinheiten in Form von Tunnelsegmenten des Tunnels 104. Die Tunnelsegmente sind aus Paneelen aufgebaut, die eine dreidimensionale Oberflächenstruktur 132 aus versetzten Pyramidenreihen aufweisen, die die Lichtausbreitung insbesondere in Richtung des Durchfahrtsbogens 102 hemmt, und die eine lichtabsorbierende Beschichtung aufweist.

Das Beleuchtungssystem 110 weist Flächenleuchteinheiten auf, die nachfolgend Lichtpaneele genannt werden. Das Beleuchtungssystem weist eine erste Gruppe 210 von Lichtpaneelen, eine zweite Gruppe 220 von Lichtpaneelen und eine dritte Gruppe 230 von Lichtpaneelen. Die Lichtpaneele der zweiten Gruppe 220, z.B. die Lichtpaneele 221, 226, 227 und 228 liegen parallel zur Längsrichtung L, d.h. die Flächennormalen dieser Lichtpaneele sind senkrecht zur Längsrichtung L. Die Flächennormalen der Lichtpaneele der ersten Gruppe 210 und der dritten Gruppe 230 sind jeweils um +45° oder -45° bezüglich der Längsrichtung L geneigt, so dass die Lichtpaneele einwärts zur Mitte des Durchfahrtsbogens 102 hin geneigt sind, wie z.B. die Lichtpaneele 211, 216, 217, 218 der ersten Gruppe 210 und die Lichtpaneele 231, 236, 237, 238 der dritten Gruppe 230. Die Lichtpaneele der ersten Gruppe 210 und der dritten Gruppe 230 schließen zur Mitte des Durchfahrtsbogens 102 hin an die Lichtpaneele der zweiten Gruppe 220 an und auswärts jeweils an eines der Tunnelsegmente des Tunnels 104.

Die Lichtpaneele der zweiten Gruppe 220 sind eingerichtet, monochromatisches, räumlich strukturiertes Licht auszustrahlen, z.B. Nahinfrarotlicht mit einem Gitter- oder Karomuster, und damit die Fahrzeugoberfläche des Fahrzeugs 150 zu beleuchten. Die Lichtpaneele der ersten Gruppe 210 und der dritten Gruppe 230 sind eingerichtet, monochromatisches, polarisiertes Licht auszustrahlen, z.B. sichtbares Licht mit linearer Polarisation, z.B. grünes Licht oder ein nach Wagenfarbe bestimmtes Licht. Die Lichtpaneele der zweiten Gruppe können insbesondere die für Dellenschäden prädestinierten Seitenbereiche des Fahrzeugs mit einem kontrastreichen, räumlich strukturierten Licht beleuchten und die Lichtpaneele der ersten Gruppe können die gesamte Fahrzeugoberfläche so beleuchten, dass eine Kratzererkennung auch feiner Kratzer in den Bilddaten möglich wird. Die Beleuchtungsstärke auf der Fahrzeugoberfläche kann für beide Beleuchtungen größer als 500 Ix sein oder sogar größer als 1000 Ix.

Das Beleuchtungssystem 110 weist eine weitere Beleuchtungseinheit 240 im Unterbodensegment 106 auf zur Beleuchtung des Unterbodens des Fahrzeugs 150. Die Beleuchtungseinheit 240 ist hier in einer mittigen Aussparung in der der Auffahrtsrampe zum Unterbodensegment 106 angeordnet.

Das Sensorsystem 120 umfasst eine Sensoreinheit 340 für das Erfassen von Bilddaten vom Unterboden des Fahrzeugs. Die Sensoreinheit 340 ist in derselben mittigen Aussparung der Auffahrtsrampe angeordnet wie die Beleuchtungseinheit 240 und kann mit der Beleuchtungseinheit 240 zusammenwirken, um Bilddaten vom Fahrzeugunterboden zu erfassen. Da es auf bei den Bilddaten vom Fahrzeugunterboden weniger auf sehr feine Kratzer ankommt, die z.B. durch Steinschlag beim gewöhnlichen Gebrauch des Fahrzeugs entstehen können, sondern auf größere Schäden, insbesondere Strukturschäden wie z.B. Achsschäden, kann die Sensoreinheit 340 z.B. zwei stereoskopische Kameras aufweisen, die z.B. 20 Megapixel-Kameras sein können. Das Sensorsystem 120 weist eine Sensoreinheit 350 zur Fahrzeugidentifizierung auf, z.B. eine gewöhnliche Überwachungskamera, die in Fahrtrichtung vor dem Durchfahrtsbogen 102 bzw. vor dem Eingang des Tunnels 104 angeordnet ist und Bilddaten des Fahrzeugs bei Hintergrundlicht (Umgebungslicht) oder ggf. gewöhnlicher Beleuchtung (z.B. Parkhausbeleuchtung) aufnehmen kann. Die Bilddaten der Sensoreinheit 350 könne wie hierin beschrieben zur Fahrzeugidentifizierung oder erweiterten Fahrzeuganalyse eingesetzt werden.

Das Sensorsystem 120 weist drei Arrays von bildgebenden Sensoreinheiten auf, ein erstes Array 310, zu dem Sensoreinheiten 311, 313, 314, 315, 316, 317, 318, 319 und eine weitere, nicht sichtbare Sensoreinheit gehören, ein zweites Array 220, zu dem Sensoreinheiten 321, 322, 323, 324, 325, 326, 327, 328 und 329 gehören, und ein drittes Array 230, zu dem Sensoreinheiten 331, 332, 333, 334, 335, 336, 337, 338 und 339 gehören. Jede dieser Sensoreinheiten der drei Arrays umfasst zwei Sensorelemente in Form einer ersten Kamera für sichtbares Licht (z.B. abgestimmt auf grünes Licht oder abgestimmt auf ein anderes Licht, das je nach Wagenfarbe ausgewählt sein kann, wobei die Wagenfarbe aus Bilddaten der Sensoreinheit 350 ermittelt worden sein kann) und einer zweiten Kamera für Infrarotlicht. Die beiden Sensorelemente einer Sensoreinheit haben nahezu denselben Blickwinkel und nahezu dieselbe Position. Die jeweils zweiten Kameras für Infrarotlicht einer jeden Sensoreinheit können mit der Beleuchtung der Lichtpaneele der zweiten Gruppe 220 zusammenwirken, d.h. deren monochromatisches, räumlich strukturiertes Nahinfrarotlicht zu erfassen eingerichtet sein, während sie die Beleuchtung durch die Lichtpaneele der ersten Gruppe 210 und der dritten Gruppe 230 ausfiltern. Umgekehrt können die jeweils ersten Kameras für sichtbares Licht einer jeden Sensoreinheit mit der Beleuchtung der Lichtpaneele der ersten Gruppe 210 und der dritten Gruppe 230 zusammenwirken, d.h. deren monochromatisches, polarisiertes, sichtbares Licht zu erfassen eingerichtet sein, während sie die Beleuchtung durch die Lichtpaneele der zweiten Gruppe 220 auszufiltern eingerichtet sein. Durch spektrale Trennung ist es möglich, dass Bilddaten basierend auf dem Nahinfrarotlicht und Bilddaten basierend auf dem sichtbaren Licht gleichzeitig aufgenommen werden können. Es können also zeitgleich Bilddaten, die für die Dellenerkennung vorteilhaft sind, und Bilddaten, die für die Kratzererkennung vorteilhaft sind, erfasst werden.

Sensoreinheiten der drei Arrays 310, 320, 330 können senkrecht zu den Flächen der Lichtpaneele der drei Gruppen 210, 220, 230 angeordnet sein, d.h. parallel zu den Flächennormalen, oder können gegenüber diesen Flächennormalen einen Winkel bilden. Insbesondere können die oberen Reihen abwärts geneigt sein, auch bei Sensoreinheiten, die auf senkrechten Lichtpaneelen angeordnet sind. Als Beispiel können die Sensoreinheiten der ersten Gruppe 310 und der dritten Gruppe 330 alle einwärts bezüglich der Mitte des Durchfahrtsbogens geneigt sein, z.B. 45°, während die Sensoreinheiten der zweiten Gruppe 320 senkrecht zur Längsachse L stehen. Die Sensoreinheiten 313, 323, 333, 317, 327 und 337 können abwärts geneigt sein, z.B. um 45°, auch wenn die Lichtpaneele auf denen sie angeordnet sind, senkrecht zum Erdboden stehen. Die Sensoreinheiten 322, 332, 316, 326, 336 sowie die weitere, nicht abgebildete Sensoreinheit der ersten Gruppe 310 können ebenfalls abwärts geneigt sein, z.B. auch um 45°, stehen dabei jedoch senkrecht auf ihren Lichtpaneelen, die ebenfalls abwärts geneigt sind. Die Sensoreinheiten 311, 321 und 331 blicken senkrecht hinab, d.h. parallel zur Höhenrichtung H. Die Ausrichtung der Kameras kann so sein, dass Blickwinkel für gewöhnliche Fahrzeugformen im Wesentlichen senkrecht zum erfassten Teil der Fahrzeugoberfläche (zum Bildbereich) sein kann. Die Brennweiten der Kameras der Sensoreinheiten können je nach zu erwartendem, gewöhnlichem Abstand zur Fahrzeugoberfläche unterschiedliche Brennweiten aufweisen, z.B. eine Brennweite von 28 mm für die Sensoreinheiten 311, 321, 331, eine Brennweite von 55 mm für die Sensoreinheiten 332, 316, 336 und für weitere, nicht abgebildete Sensoreinheit der ersten Gruppe 310, eine Brennweite von 35 mm für die Sensoreinheiten 313, 314, 315, 317, 318, 319, 322, 323, 326, 327, 333, 334, 335, 337, 338, 339 und eine Brennweite von 15 mm für die Sensoreinheiten 324, 325, 328 und 329. Die Kameras können z.B. hochauflösende 40 Megapixel-Kameras sein. Die Blickwinkel und optischen Betriebsparameter (Brennweiten, Polarisationen etc.) der Kameras können fest aber trotzdem für typische Situation ausreichend sein, oder können veränderlich sein wie hierin beschrieben, z.B. konfigurierbar im Hinblick auf Fahrzeugeigenschaften und Bewegungszustand/voraussichtlicher Fahrspur des Fahrzeugs 150. Die Sensoreinheiten bzw. Kameras können räumlich registriert sein.

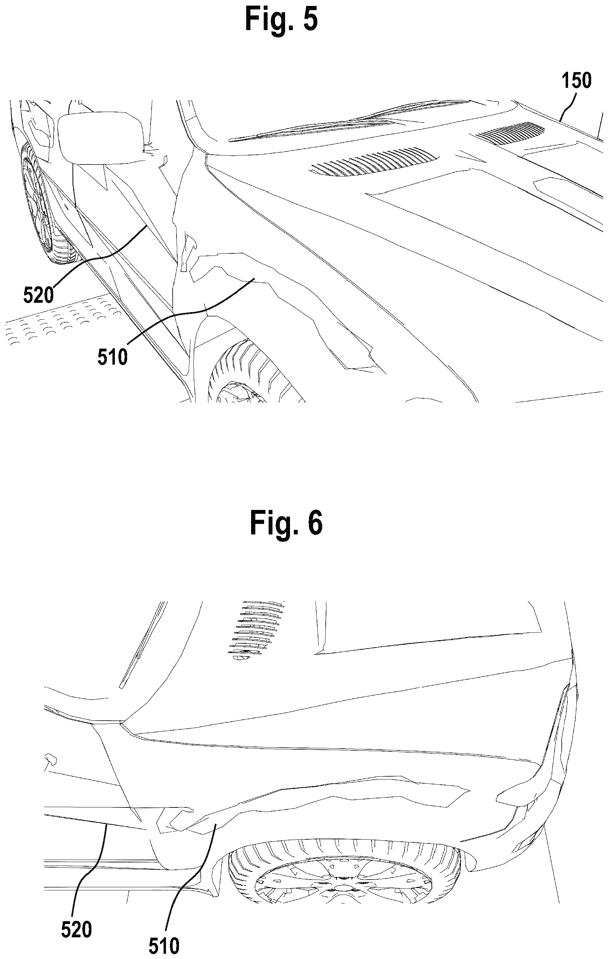

Durch ihre Anordnung und Eigenschaften können die Sensoreinheiten im Zusammenspiel mit den speziellen Beleuchtungen der Beleuchtungseinheiten qualitativ hochwertige Bilder erzeugen, aus denen nach Bildverarbeitung zuverlässig Schäden erkannt werden können. Fig. 5 zeigt illustrativ ein gezeichnetes Bild, wie es von der ersten Kamera für sichtbares Licht der Sensoreinheit 333 aus ihrem Blickwinkel erfasst worden sein könnte. Fig. 6 zeigt illustrativ ein gezeichnetes Bild, wie es von der ersten Kamera für sichtbares Licht der Sensoreinheit 322 aus ihrem Blickwinkel erfasst worden sein könnte. Zur Illustration sind nicht kleine Schäden, sondern große Schäden gezeigt, nämlich eine Delle 510 und ein Kratzer 520.

Die Vorrichtung des Beispiels der Figs. 2-4 kann sämtliche hierin beschriebenen Funktionen ausführen, einschließlich aller Funktionen eines in diesen Abbildungen nicht gezeigten Auswertesystems. Weitere Ausführungsformen beziehen sich auf die Verwendung einer hierin beschriebenen Vorrichtung zur Schadenserkennung an einem fahrenden Fahrzeug, insbesondere einem Automobil, das durch die Vorrichtung hindurchfährt. Weitere Ausführungsformen beziehen sich auf ein Verfahren zur Schadenserkennung an einem fahrenden Fahrzeug. Dieses Verfahren kann jede Kombination von hierin beschriebenen Vorgängen als Verfahrensschritte umfassen, und kann sich dabei der beschriebenen Vorrichtung und ihrer Systems, Einheiten und Elemente bedienen.

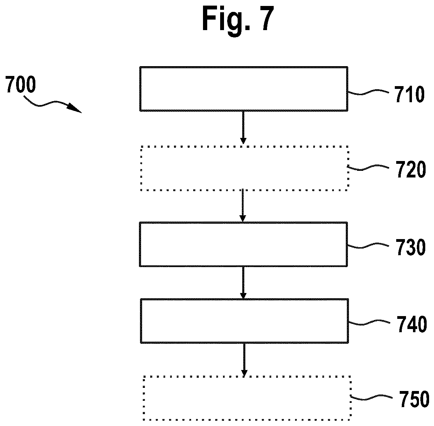

In der Fig. 7 ist ein Verfahren 700 zur Schadenserkennung an einem fahrenden Fahrzeug dargestellt. Das Verfahren umfasst das Beleuchten 710 eines fahrenden Fahrzeugs, z.B. mit einem hierin beschriebenen Beleuchtungssystem. Das Beleuchten 710 kann ein Beleuchten mit erstem Licht umfassen, wobei das erste Licht monochromatisches Licht sein kann, welches polarisiertes oder räumlich zweidimensional strukturiertes Licht sein kann. Das Beleuchten 710 kann ein Beleuchten mit zweitem Licht umfassen, wobei das zweite Licht ein monochromatisches Licht einer anderen Frequenz als das erste Licht sein kann. Das zweite Licht kann räumlich zweidimensional strukturiertes Licht sein, insbesondere wenn das erste Licht polarisiertes Licht ist, und kann polarisiertes Licht sein, insbesondere wenn das erste Licht räumlich zweidimensional strukturiert ist. Das Verfahren kann eine Reduktion 720 der Lichtintensität des eintreffenden Hintergrundlichts umfassen, z.B. durch passive Lichtreduktionseinheiten wie hierin beschrieben. Das Verfahren umfasst weiter das Erfassen 730 von Bilddaten von dem fahrenden Fahrzeug, z.B. durch ein hierin beschriebenes Sensorsystem. Das Erfassen 730 von Bilddaten vom fahrenden Fahrzeug kann ein Erfassen erster Bilddaten bei einer ersten Beleuchtung mit dem ersten Licht umfassen. Das Erfassen 730 von Bilddaten vom fahrenden Fahrzeug kann ein Erfassen zweiter Bilddaten bei einer zweiten Beleuchtung umfassen, die von der ersten Beleuchtung verschieden ist, wobei die zweite Beleuchtung eine Beleuchtung mit dem zweiten Licht umfassen oder sein kann. Die ersten Bilddaten und die zweiten Bilddaten können von demselben Bildbereich aufgenommen worden sein (wobei ggf. kleine Verschiebungen durch eine Fahrzeugbewegung zu vernachlässigen sein sollen). Das Verfahren umfasst das Erkennen 740 eines Fahrzeugschadens, z.B. mit einem hierin beschriebenen Auswertesystem. Das Erkennen 740 eines Fahrzeugschadens kann ein Erkennen des Fahrzeugschadens auf Grundlage der erfassten Bilddaten bzw. der erfassten ersten und zweiten Bilddaten umfassen. Das Verfahren kann ein Ausgeben 750 eines erkannten Schadens umfassen, z.B. auf einem Bildschirm.

## Patentansprüche

1. Vorrichtung zur Schadenserkennung an einem fahrenden Fahrzeug, umfassend:
ein Beleuchtungssystem zum Beleuchten des fahrenden Fahrzeugs;
ein Sensorsystem zum Erfassen von Bilddaten von dem fahrenden Fahrzeug; und
ein Auswertesystem zum Erkennen eines Fahrzeugschadens,
wobei das Beleuchtungssystem umfasst:
eine erste Beleuchtungseinheit, die eingerichtet ist, das fahrende Fahrzeug mit erstem Licht zu beleuchten, und eine zweite Beleuchtungseinheit, die eingerichtet ist, das fahrende Fahrzeug mit zweitem Licht zu beleuchten, das von dem ersten Licht verschieden ist,
wobei die erste Beleuchtungseinheit eingerichtet ist, das fahrende Fahrzeug mit polarisiertem Licht zu beleuchten, wobei das erste Licht polarisiertes Licht ist, und
wobei die zweite Beleuchtungseinheit eingerichtet ist, das fahrende Fahrzeug mit Licht zu beleuchten, das eine Frequenz im Infrarotbereich und eine räumliche Strukturierung aufweist, wobei das zweite Licht Infrarotlicht und räumlich strukturiertes Licht ist;
wobei das Sensorsystem umfasst:
ein erstes Sensorelement, das eingerichtet ist, erste Bilddaten von dem fahrenden Fahrzeug in einem Bildbereich bei Beleuchtung mit dem ersten Licht zu erfassen und ein zweites Sensorelement, das eingerichtet ist, zweite Bilddaten von dem fahrenden Fahrzeug in dem Bildbereich bei Beleuchtung mit dem zweiten Licht zu erfassen, wobei das erste Sensorelement eingerichtet ist, die ersten Bilddaten bei der Beleuchtung mit dem ersten Licht unter Trennung von der Beleuchtung mit dem zweiten Licht zu erfassen, und wobei das zweite Sensorelement eingerichtet ist, die zweiten Bilddaten bei der Beleuchtung mit dem zweiten Licht unter Trennung von der Beleuchtung mit dem ersten Licht zu erfassen; und
wobei das Auswertesystem eingerichtet ist zum Erkennen des Fahrzeugschadens auf Grundlage der erfassten ersten und zweiten Bilddaten.

2. Vorrichtung nach Anspruch 1, wobei die erste Beleuchtungseinheit eingerichtet ist, das fahrende Fahrzeug mit monochromatischem Licht zu beleuchten, wobei das erste Licht monochromatisches Licht ist, vorzugsweise sichtbares Licht; und/oder
wobei die zweite Beleuchtungseinheit eingerichtet ist, das fahrende Fahrzeug mit Licht zu beleuchten, das eine zweidimensionale räumliche Strukturierung aufweist.

3. Vorrichtung nach Anspruch 1, wobei das erste Sensorelement eingerichtet ist, die ersten Bilddaten von dem fahrenden Fahrzeug in dem Bildbereich bei der Beleuchtung mit dem ersten Licht unter spektraler Trennung von der zweiten Beleuchtung zu erfassen, und das zweite Sensorelement eingerichtet ist, die zweiten Bilddaten von dem fahrenden Fahrzeug in dem Bildbereich bei der zweiten Beleuchtung unter spektraler Trennung von der Beleuchtung mit dem ersten Licht zu erfassen, wobei das erste Sensorelement und das zweite Sensorelement vorzugsweise zur zeitgleichen oder zeitlich mit den Beleuchtungen koordinierten Erfassung der ersten Bilddaten bzw. der zweiten Bilddaten eingerichtet sind, wobei vorzugsweise das erste Sensorelement ein erstes Spektralfilter aufweist und das zweite Sensorelement ein zweites Spektralfilter aufweist, wobei die vom ersten und zweiten Spektralfilter durchgelassenen Spektren im Wesentlichen überlappungsfrei sind.

4. Vorrichtung nach Anspruch 1, wobei
a) das erste Sensorelement das eingerichtet ist, Bilddaten von dem fahrenden Fahrzeug bei Beleuchtung mit ersten Licht zu erfassen, eine veränderliche Polarisationsfilterung aufweist und eingerichtet ist, die ersten Bilddaten von dem fahrenden Fahrzeug in dem Bildbereich bei der Beleuchtung mit dem ersten Licht unter einer ersten Polarisationsfilterung zu einem ersten Zeitpunkt zu erfassen und die zweiten Bilddaten von dem fahrenden Fahrzeug in dem Bildbereich bei der zweiten Beleuchtung unter einer zweiten Polarisationsfilterung zu einem zweiten Zeitpunkt zu erfassen, wobei die zweite Polarisationsfilterung verschieden von der ersten Polarisationsfilterung ist;
oder
b) wobei das erste Sensorelement eingerichtet ist, die ersten Bilddaten von dem fahrenden Fahrzeug in dem Bildbereich bei der Beleuchtung mit dem ersten Licht unter einer ersten Polarisationsfilterung zu erfassen, und das zweite Sensorelement eingerichtet ist, die zweiten Bilddaten von dem fahrenden Fahrzeug in dem Bildbereich bei der zweiten Beleuchtung unter einer zweiten Polarisationsfilterung zu erfassen, wobei die zweite Polarisationsfilterung verschieden von der ersten Polarisationsfilterung ist, wobei das erste Sensorelement und das zweite Sensorelement vorzugsweise zur zeitgleichen oder zeitlich mit den Beleuchtungen koordinierten Erfassung der ersten Bilddaten bzw. der zweiten Bilddaten eingerichtet sind.

5. Vorrichtung nach einem der vorhergehenden Ansprüche, wobei die Vorrichtung ein Lichtreduktionssystem zur Reduzierung des Einflusses von Hintergrundlicht umfasst, wobei das Lichtreduktionssystem einen für das fahrende Fahrzeug passierbaren, lichtabsorbierenden Tunnel umfasst.

6. Vorrichtung nach einem der vorhergehenden Ansprüche, wobei das Auswertesystem oder das Sensorsystem eingerichtet ist, unter Verwendung der ersten Bilddaten und der zweiten Bilddaten einen optischen Lock-in-Verstärker zur Reduzierung des Einflusses von Hintergrundlicht zu steuern oder unter Verwendung der ersten Bilddaten und der zweiten Bilddaten eine Bilddatenverarbeitung zur Reduzierung des Einflusses von Hintergrundlicht durchzuführen, vorzugsweise unter Verwendung einer Fouriertransformationstechnik bei der Bilddatenverarbeitung.

7. Vorrichtung nach einem der vorhergehenden Ansprüche, wobei das Sensorsystem eingerichtet ist, eine erste Information über eine Fahrzeugeigenschaft und/oder einen Bewegungszustand des fahrenden Fahrzeugs zu erlangen, und wobei das Auswertesystem eingerichtet ist, ein Sensorelement oder mehrere Sensorelemente, das/die zur Erfassung von Bilddaten von dem fahrenden Fahrzeug eingerichtet ist/sind, zur Erfassung der Bilddaten in Abhängigkeit von der ersten Information zu konfigurieren.

8. Vorrichtung nach einem der vorhergehenden Ansprüche, wobei das Auswertesystem eingerichtet ist, die erfassten Bilddaten vollautomatisch zu verarbeiten und/oder den Fahrzeugschaden vollautomatisch zu erkennen, wobei das Auswertesystem vorzugsweise eingerichtet ist, mindestens zur Erkennung des Fahrzeugschadens ein Verfahren mit künstlicher Intelligenz einzusetzen.

9. Vorrichtung nach einem der vorhergehenden Ansprüche, wobei das Beleuchtungssystem und das Sensorsystem einen für das fahrende Fahrzeug passierbaren Durchfahrtsbogen bilden, dessen Länge in Fahrtrichtung des fahrenden Fahrzeugs vorzugsweise von einem bis fünf Metern beträgt.

10. Verfahren zur Schadenserkennung an einem fahrenden Fahrzeug, umfassend:
Beleuchten des fahrenden Fahrzeugs mit erstem Licht und Beleuchten des fahrenden Fahrzeugs mit zweitem Licht, wobei das erste Licht von dem zweiten Licht verschieden ist, wobei das erste Licht polarisiertes Licht ist und wobei das zweite Licht Infrarotlicht und räumlich strukturiertes Licht ist; und
Erfassen von ersten Bilddaten von dem fahrenden Fahrzeug in einem Bildbereich bei Beleuchtung mit dem ersten Licht unter Trennung von der Beleuchtung mit dem zweiten Licht; und
Erfassen von zweiten Bilddaten von dem fahrenden Fahrzeug in dem Bildbereich bei der Beleuchtung mit dem zweiten Licht unter Trennung von der Beleuchtung mit dem ersten Licht; und
Erkennen eines Fahrzeugschadens auf Grundlage der erfassten ersten und zweiten Bilddaten.

## Claims

1. Device for detecting damage to a moving vehicle, comprising:
an illumination system for illuminating the moving vehicle;
a sensor system for capturing image data from the moving vehicle; and
an evaluation system for detecting a vehicle damage,
wherein the illumination system comprises:
a first illumination unit configured to illuminate the moving vehicle with a first light, and
a second illumination unit configured to illuminate the moving vehicle with a second light, which is different from the first light,
wherein the first illumination unit is configured to illuminate the moving vehicle with polarized light, wherein the first light is polarized light, and
wherein the second illumination unit is configured to illuminate the moving vehicle with light which has a frequency in the infrared range and a spatial structure, wherein the
second light is infrared light and spatially structured light;
whereby the sensor system comprises:
a first sensor element configured to detect first image data of the moving vehicle in an image area under illumination with the first light, and a second sensor element configured to detect second image data of the moving vehicle in the image area under illumination with the second light, wherein the first sensor element is configured to detect the first image data under illumination with the first light with separation from the illumination with the second light, and wherein the second sensor element is configured to detect the second image data under illumination with the second light with
separation from the illumination with the first light; and
whereby the evaluation system is configured to detect the vehicle damage on the basis of the captured first and second image data.

2. The device according to claim 1, wherein the first illumination unit is configured to illuminate the moving vehicle with monochromatic light, wherein the first light is monochromatic light, preferably visible light; and/or
whereby the second illumination unit is configured to illuminate the moving vehicle with light that has a two-dimensional spatial structure.

3. The device according to claim 1, wherein the first sensor element is configured to detect the first image data from the moving vehicle in the image area under illumination with the first light with spectral separation from the second illumination, and the second sensor element is configured to detect the second image data from the moving vehicle in the image area under the second illumination with spectral separation from the illumination with the first light, wherein the first sensor element and the second sensor element are preferably arranged for simultaneous or temporally coordinated detection of the first image data and the second image data, respectively, wherein preferably the first sensor element has a first spectral filter and the second sensor element has a second spectral filter, wherein the spectra transmitted through the first and second spectral filters are essentially free of overlap.

4. Device according to claim 1, wherein
a) the first sensor element, which is configured to detect image data from the moving vehicle when illuminated with first light, has a variable polarization filtering and is configured to detect the first image data from the moving vehicle in the image area when illuminated with the first light under a first polarization filtering at a first point in time and to detect the second image data from the moving vehicle in the image area when illuminated with the second light under a second polarization filtering at a second point in time, wherein the second polarization filtering is different from the first polarization filtering;
or
b) wherein the first sensor element is configured to detect the first image data from the moving vehicle in the image area when illuminated with the first light under a first polarization filtering, and the second sensor element is configured to detect the second image data from the moving vehicle in the image area when illuminated with the second light under a second polarization filtering, wherein the second polarization filtering is different from the first polarization filtering, wherein the first sensor element and the second sensor element are preferably configured to detect the first image data or the second image data simultaneously or coordinated in time with the illuminations.

5. The device according to any one of the preceding claims, wherein the device comprises a light reduction system for reducing the influence of background light, wherein the light reduction system comprises a light-absorbing tunnel passable by the moving vehicle.

6. Device according to one of the preceding claims, wherein the evaluation system or the sensor system is configured to control an optical lock-in amplifier for reducing the influence of background light using the first image data and the second image data or to perform image data processing for reducing the influence of background light using the first image data and the second image data, preferably using a Fourier transform technique in the image data processing.

7. Device according to one of the preceding claims, wherein the sensor system is configured to obtain a first information about a vehicle characteristic and/or a movement state of the moving vehicle, and wherein the evaluation system is configured to configure a sensor element or several sensor elements, which is/are configured to acquire image data from the moving vehicle, to acquire the image data in dependence on the first information.

8. Device according to one of the preceding claims, wherein the evaluation system is configured to process the captured image data fully automatically and/or to detect the vehicle damage fully automatically, wherein the evaluation system is preferably configured to use a method with artificial intelligence at least for recognizing the vehicle damage.

9. Device according to one of the preceding claims, wherein the illumination system and the sensor system form an arc of passage passable by the moving vehicle, the length of which in the direction of travel of the moving vehicle is preferably from one to five meters.

10. A method for detecting damage to a moving vehicle, comprising:
illuminating the moving vehicle with a first light and illuminating the moving vehicle with a second light, wherein the first light is different from the second light, wherein the first light is polarized light, and wherein the second light is infrared light and spatially structured light; and
capturing first image data of the moving vehicle in an image area under illumination with the first light while separating it from the illumination with the second light; and
capturing second image data of the moving vehicle in the image area under illumination with the second light while separating it from the first light illumination; and
detecting of a vehicle damage based on the captured first and second image data.

## Revendications

1. Dispositif de détection des dommages sur un véhicule en déplacement, comprenant :
un système d'éclairage pour éclairer le véhicule en déplacement ;
un système de capteur pour collecter des données d'image provenant du véhicule en déplacement ; et
un système d'évaluation pour détecter un dommage causé au véhicule,
dans lequel le système d'éclairage comprend :
une première unité d'éclairage conçue pour éclairer le véhicule en déplacement avec une première lumière, et une seconde unité d'éclairage conçue pour éclairer le véhicule en déplacement avec une seconde lumière différente de la première lumière,
dans lequel la première unité d'éclairage est conçue pour éclairer le véhicule en déplacement avec une lumière polarisée, dans lequel la première lumière est une lumière polarisée, et dans lequel la seconde unité d'éclairage est conçue pour éclairer le véhicule en déplacement avec une lumière qui présente une fréquence dans le domaine infrarouge et une structuration spatiale, dans lequel la seconde lumière est une lumière infrarouge et une lumière spatialement structurée ;
dans lequel le système de capteur comprend :
un premier élément capteur conçu pour collecter de premières données d'image provenant du véhicule en déplacement dans une zone d'image lors de l'éclairage avec la première lumière et un second élément capteur conçu pour collecter de secondes données d'image provenant du véhicule en déplacement dans la zone d'image lors de l'éclairage avec la seconde lumière, dans lequel le premier élément capteur est conçu pour collecter les premières données d'image lors de l'éclairage avec la première lumière, en dissociant celui-ci de l'éclairage avec la seconde lumière, et dans lequel le second élément capteur est conçu pour collecter les secondes données d'image lors de l'éclairage avec la seconde lumière, en dissociant celui-ci de l'éclairage avec la première lumière ; et
dans lequel le système d'évaluation est conçu pour détecter le dommage causé au véhicule sur la base des premières et secondes données d'image collectées.

2. Dispositif selon la revendication 1, dans lequel la première unité d'éclairage est conçue pour éclairer le véhicule en déplacement avec une lumière monochromatique, dans lequel la première lumière est une lumière monochromatique, de préférence une lumière visible ; et/ou
dans lequel la seconde unité d'éclairage est conçue pour éclairer le véhicule en déplacement avec une lumière qui présente une structuration spatiale bidimensionnelle.

3. Dispositif selon la revendication 1, dans lequel le premier élément capteur est conçu pour collecter les premières données d'image provenant du véhicule en déplacement dans la zone d'image lors de l'éclairage avec la première lumière, en dissociant spectralement celui-ci du second éclairage, et le second élément capteur est conçu pour collecter les secondes données d'image provenant du véhicule en déplacement dans la zone d'image lors du second éclairage, en dissociant spectralement celui-ci de l'éclairage avec la première lumière, dans lequel le premier élément capteur et le second élément capteur sont de préférence conçus pour la collecte des premières données d'image ou des secondes données d'image, laquelle collecte est simultanée ou coordonnée temporellement avec les éclairages, dans lequel de préférence le premier élément capteur présente un premier filtre spectral et le second élément capteur présente un second filtre spectral, dans lequel les spectres transmis par le premier et le second filtre spectral sont sensiblement sans chevauchement.

4. Dispositif selon la revendication 1, dans lequel
a) le premier élément capteur, conçu pour collecter des données d'image provenant du véhicule en déplacement lors de l'éclairage avec la première lumière, présente un filtrage de polarisation variable et est conçu pour collecter les premières données d'image provenant du véhicule en déplacement dans la zone d'image lors de l'éclairage avec la première lumière sous un premier filtrage de polarisation à un premier moment, et pour collecter les secondes données d'image provenant du véhicule en déplacement dans la zone d'image lors du second éclairage sous un second filtrage de polarisation à un second moment, dans lequel le second filtrage de polarisation est différent du premier filtrage de polarisation ;
ou
b) dans lequel le premier élément capteur est conçu pour collecter les premières données d'image provenant du véhicule en déplacement dans la zone d'image lors de l'éclairage avec la première lumière sous un premier filtrage de polarisation, et le second élément capteur est conçu pour collecter les secondes données d'image provenant du véhicule en déplacement dans la zone d'image lors du second éclairage sous un second filtrage de polarisation, dans lequel le second filtrage de polarisation est différent du premier filtrage de polarisation, dans lequel le premier élément capteur et le second élément capteur sont de préférence conçus pour la collecte des premières données d'image ou des secondes données d'image simultanée ou coordonnée temporellement avec les éclairages.

5. Dispositif selon l'une des revendications précédentes, dans lequel le dispositif comprend un système de réduction de lumière pour la réduction de l'effet de la lumière d'arrière-plan, dans lequel le système de réduction de lumière comprend un tunnel absorbant la lumière et praticable pour le véhicule en déplacement.

6. Dispositif selon l'une des revendications précédentes, dans lequel le système d'évaluation ou le système de capteur est conçu pour commander, à l'aide des premières données d'image et des secondes données d'image, un amplificateur à verrouillage optique pour la réduction de l'effet de la lumière d'arrière-plan ou pour exécuter, à l'aide des premières données d'image et des secondes données d'image, un traitement de données d'image, de préférence à l'aide d'une technique de transformée de Fourier lors du traitement de données d'image, pour la réduction de l'effet de la lumière d'arrière-plan.

7. Dispositif selon l'une des revendications précédentes, dans lequel le système de capteur est conçu pour acquérir une première information sur une caractéristique du véhicule et/ou un état de mouvement du véhicule en déplacement, et dans lequel le système d'évaluation est conçu pour configurer un élément capteur ou plusieurs éléments capteurs, qui est/sont conçu(s) pour collecter des données d'image provenant du véhicule en déplacement, pour la collecte des données d'image en fonction de la première information.

8. Dispositif selon l'une des revendications précédentes, dans lequel le système d'évaluation est conçu pour traiter de manière entièrement automatisée les données d'image collectées et/ou pour détecter de manière entièrement automatisée le dommage causé au véhicule, dans lequel le système d'évaluation est de préférence conçu pour utiliser un procédé d'intelligence artificielle au moins pour la détection du dommage causé au véhicule.

9. Dispositif selon l'une des revendications précédentes, dans lequel le système d'éclairage et le système de capteur forment un arc de passage praticable pour le véhicule en déplacement, arc de passage dont la longueur dans la direction de déplacement du véhicule en déplacement est de préférence d'un à cinq mètres.

10. Procédé de détection des dommages sur un véhicule en déplacement, comprenant :
l'éclairage du véhicule en déplacement avec une première lumière et l'éclairage du véhicule en déplacement avec une seconde lumière, dans lequel la première lumière est différente de la seconde lumière, dans lequel la première lumière est une lumière polarisée et dans lequel la seconde lumière est une lumière infrarouge et une lumière spatialement structurée ; et
la collecte de premières données d'image provenant du véhicule en déplacement dans une zone d'image lors de l'éclairage avec la première lumière, en dissociant celui-ci de l'éclairage avec la seconde lumière ; et
la collecte de secondes données d'image provenant du véhicule en déplacement dans la zone d'image lors de l'éclairage avec la seconde lumière, en dissociant celui-ci de l'éclairage avec la première lumière ; et
la détection d'un dommage causé au véhicule sur la base des premières et secondes données d'image collectées.
